# EUROPEAN PATENT APPLICATION

(11) **EP 4 819 685 A1**
(43) Date of publication of application: **07.10.2026**
(21) Application number: 24905560.9
(22) Date of filing: 07.08.2024
(51) Int. Cl.: H04W 36/00

(54) **CELL ACCESS METHOD, ELECTRONIC DEVICE, CHIP SYSTEM, AND STORAGE MEDIUM**

(30) Priority: 18.12.2023 CN 202311759819
(71) Applicant: Honor Device Co., Ltd., Shenzhen, Guangdong 518040 (CN)
(72) Inventor: LI, Haibo, Shenzhen, Guangdong 518040 (CN)
(74) Representative: Gill Jennings & Every LLP
(86) International application number: PCT/CN2024/110245
(87) International publication number: WO 2025/130064

(57) **Abstract**

This application discloses a cell access method, an electronic device, a chip system, and a storage medium, and belong to the field of communication technologies. The method includes: determining, by an electronic device after receiving a redirection message sent by a target cell, a first quantity of times if access to a cell corresponding to a redirected frequency point carried in the redirection message fails. The first quantity of times is a quantity of times of failure of access to the cell corresponding to the redirected frequency point indicated by the target cell within a first preset duration prior to a current moment. A cell other than the target cell is accessed if the first quantity of times is greater than or equal to a first quantity of times threshold. In this way, subsequent re-occurrence of redirection may be prevented to some extent. In addition, even if redirection occurs subsequently, a problem that the electronic device fails to access the cell corresponding to the redirected frequency point may also be prevented to some extent. In this way, repeated redirection of the electronic device within a short time can be prevented to some extent, and then the problem of service stuttering or even interruption can be prevented to some extent.

## Description

This application claims priority to Chinese Patent Application No. 202311759819.1, filed with the China National Intellectual Property Administration on December 18, 2023 and entitled "CELL ACCESS METHOD, ELECTRONIC DEVICE, CHIP SYSTEM, AND STORAGE MEDIUM", which is incorporated herein by reference in its entirety.

### TECHNICAL FIELD

This application relates to the field of communication technologies, and in particular, to a cell access method, an electronic device, a chip system, and a storage medium.

### BACKGROUND

Currently, a user equipment (user equipment, UE) may report an A2 event to a serving cell when signal quality of the serving cell is lower than a threshold, to expect the serving cell to issue an indication to instruct the UE to hand over to another cell. After receiving the A2 event, the serving cell may send a redirection message to the UE. Then, the UE may access a cell corresponding to a redirected frequency point carried in the redirection message. However, in an actual situation, due to influences of various factors, a problem easily occurs that the UE fails to access the cell corresponding to the redirected frequency point, which may cause service stuttering or even interruption.

### SUMMARY

This application provides a cell access method, an electronic device, a chip system, and a storage medium, which can prevent the problem of service stuttering or even interruption to some extent. The technical solutions are as follows:

According to a first aspect, a cell access method is provided. In the method, an electronic device receives a redirection message sent by a target cell. Then, a cell corresponding to a redirected frequency point carried in the redirection message is accessed. A first quantity of times is determined if access to the cell corresponding to the redirected frequency point carried in the redirection message fails. The first quantity of times is a quantity of times of failure of access to the cell corresponding to the redirected frequency point indicated by the target cell within a first preset duration prior to a current moment. A first policy is executed if the first quantity of times is greater than or equal to a first quantity of times threshold. The first policy is: accessing a cell other than the target cell.

If the first quantity of times is greater than or equal to the first quantity of times threshold, it indicates that the electronic device attempts multiple times to access the cell corresponding to the redirected frequency point indicated by the target cell within a short time but fails. In this case, it is reasonable to suspect that this problem is likely caused by the target cell. Therefore, in this application, after failing to access the cell corresponding to the redirected frequency point, the electronic device may be barred from returning to the target cell, that is, may access a cell other than the target cell, if the first quantity of times is greater than or equal to the first quantity of times threshold. The cell may be an intra-system neighboring cell of the target cell or may be an inter-system neighboring cell of the target cell.

After the electronic device accesses a cell other than the target cell, on the one hand, the problem of re-redirection caused by low cell signal quality can be prevented to some extent. On the other hand, even if redirection needs to be performed subsequently, since it is highly probable that a redirected frequency point indicated by the cell other than the target cell is different from the redirected frequency point indicated by the target cell, a problem that the electronic device fails to access the cell corresponding to the redirected frequency point can be prevented to some extent. In this way, repeated redirection of the electronic device within a short time can be prevented to some extent, and then the problem of service stuttering or even interruption can be prevented to some extent.

Optionally, after receiving the redirection message, if the electronic device does not find the cell corresponding to the redirected frequency point carried in the redirection message, it is determined that access to the cell corresponding to the redirected frequency point carried in the redirection message fails.

During blind redirection, the target cell may directly specify a redirected frequency point. In this case, there may be no cell corresponding to the redirected frequency point nearby the electronic device. Consequently, the electronic device fails to access the cell corresponding to the redirected frequency point.

Optionally, the operation of determining the first quantity of times if the electronic device fails to access the cell corresponding to the redirected frequency point carried in the redirection message may be: determining, by the electronic device if access to the cell corresponding to the redirected frequency point carried in the redirection message fails, the first quantity of times when a cell identifier of the target cell is not a problem cell identifier. However, the electronic device directly executes the first policy when the cell identifier of the target cell is a problem cell identifier.

The problem cell identifier may be some cell identifiers recorded in advance by the electronic device. The problem cell identifier is used for identifying a problem cell. If the electronic device fails to access, multiple times, a cell corresponding to a redirected frequency point indicated by a cell, the electronic device may record the cell as a problem cell. Therefore, after failing to access the cell corresponding to the redirected frequency point carried in the redirection message, the electronic device may directly execute the first policy when the cell identifier of the target cell is a problem cell identifier, that is, when the target cell is a problem cell, to access a cell other than the target cell.

Optionally, after determining the first quantity of times, the electronic device may record the cell identifier of the target cell as a problem cell identifier if the first quantity of times is greater than or equal to the first quantity of times threshold.

Optionally, the operation of determining the first quantity of times if the electronic device fails to access the cell corresponding to the redirected frequency point carried in the redirection message may be: determining, by the electronic device if access to the cell corresponding to the redirected frequency point carried in the redirection message fails, the first quantity of times when the first policy has not been executed within a fifth preset duration prior to the current moment.

As an example, if failing to access the cell corresponding to the redirected frequency point carried in the redirection message fails, the electronic device determines a second quantity of times when the first policy has been executed within the fifth preset duration prior to the current moment, the second quantity of times being a quantity of times of failure of access to a cell corresponding to a redirected frequency point indicated by a cell corresponding to a target frequency point within a second preset duration prior to the current moment, and the target frequency point being a frequency point of the target cell; and executes a second policy if the second quantity of times is greater than or equal to a second quantity of times threshold, the second policy being: accessing a cell corresponding to a frequency point other than the target frequency point.

As another example, if failing to access the cell corresponding to the redirected frequency point carried in the redirection message fails, the electronic device determines a third quantity of times when the first policy has been executed within the fifth preset duration prior to the current moment, the third quantity of times being a quantity of times of failure of access to the cell corresponding to the redirected frequency point within a third preset duration prior to the current moment; and executes a third policy if the third quantity of times is greater than or equal to a third quantity of times threshold, the third policy being: accessing a cell and sending target information to the cell after the cell is accessed, the target information being used for indicating that the electronic device does not support a specified frequency band, the specified frequency band being a frequency band in which the redirected frequency point is located.

According to a second aspect, a cell access method is provided. In the method, an electronic device receives a redirection message sent by a target cell. Then, a cell corresponding to a redirected frequency point carried in the redirection message is accessed. A second quantity of times is determined if access to the cell corresponding to the redirected frequency point carried in the redirection message fails. The second quantity of times is a quantity of times of failure of access to a cell corresponding to a redirected frequency point indicated by a cell corresponding to a target frequency point within a second preset duration prior to a current moment. The target frequency point is a frequency point of the target cell. A second policy is executed if the second quantity of times is greater than or equal to a second quantity of times threshold. The second policy is: accessing a cell corresponding to a frequency point other than the target frequency point.

If the second quantity of times is greater than or equal to the second quantity of times threshold, it indicates that the electronic device attempts multiple times to access the cell corresponding to the redirected frequency point indicated by the cell corresponding to the target frequency point within a short time but fails. In this case, it is reasonable to suspect that cells corresponding to the target frequency point are all likely to have this problem. Therefore, in this application, after failing to access the cell corresponding to the redirected frequency point, the electronic device may be barred from returning to the target frequency point, that is, may access a cell corresponding to a frequency point other than the target frequency point if the second quantity of times is greater than or equal to the second quantity of times threshold. The cell may be an intra-system neighboring cell of the target cell or may be an inter-system neighboring cell of the target cell.

After the electronic device accesses a cell corresponding to a frequency point other than the target frequency point, on the one hand, the problem of re-redirection caused by low cell signal quality can be prevented to some extent. On the other hand, even if redirection needs to be performed subsequently, since it is highly probable that a redirected frequency point indicated by the cell corresponding to the frequency point other than the target frequency point is different from the redirected frequency point indicated by the cell corresponding to the target frequency point, a problem that the electronic device fails to access the cell corresponding to the redirected frequency point can be prevented to some extent. In this way, repeated redirection of the electronic device within a short time can be prevented to some extent, and then the problem of service stuttering or even interruption can be prevented to some extent.

Optionally, after receiving the redirection message, if the electronic device does not find the cell corresponding to the redirected frequency point carried in the redirection message, it is determined that access to the cell corresponding to the redirected frequency point carried in the redirection message fails.

During blind redirection, the target cell may directly specify a redirected frequency point. In this case, there may be no cell corresponding to the redirected frequency point nearby the electronic device. Consequently, the electronic device fails to access the cell corresponding to the redirected frequency point.

Optionally, the operation of determining the second quantity of times if the electronic device fails to access the cell corresponding to the redirected frequency point carried in the redirection message may be: determining, by the electronic device if access to the cell corresponding to the redirected frequency point carried in the redirection message fails, the second quantity of times when the target frequency point is not a problem frequency point. However, the electronic device directly executes the second policy when the target frequency point is a problem frequency point.

The problem frequency point may be some frequency points recorded in advance by the electronic device. If the electronic device fails to access, multiple times, a cell corresponding to a redirected frequency point indicated by a cell corresponding to a frequency point, the electronic device may record the frequency point as a problem frequency point. Therefore, after failing to access the cell corresponding to the redirected frequency point carried in the redirection message, the electronic device may directly execute the second policy when the frequency point of the target cell is a problem frequency point, that is, to access a cell corresponding to a frequency point other than the target frequency point.

Optionally, after determining the second quantity of times, the electronic device may record the target frequency point as a problem frequency point if the second quantity of times is greater than or equal to the second quantity of times threshold.

Optionally, the operation of determining the second quantity of times if the electronic device fails to access the cell corresponding to the redirected frequency point carried in the redirection message may be: determining, by the electronic device if access to the cell corresponding to the redirected frequency point carried in the redirection message fails, the second quantity of times when the second policy has not been executed within a fifth preset duration prior to the current moment.

As another example, if failing to access the cell corresponding to the redirected frequency point carried in the redirection message fails, the electronic device determines a third quantity of times when the second policy has been executed within the fifth preset duration prior to the current moment, the third quantity of times being a quantity of times of failure of access to the cell corresponding to the redirected frequency point within a third preset duration prior to the current moment; and executes a third policy if the third quantity of times is greater than or equal to a third quantity of times threshold, the third policy being: accessing a cell and sending target information to the cell after the cell is accessed, the target information being used for indicating that the electronic device does not support a specified frequency band, the specified frequency band being a frequency band in which the redirected frequency point is located.

According to a third aspect, a cell access method is provided. In the method, an electronic device receives a redirection message sent by a target cell. Then, a cell corresponding to a redirected frequency point carried in the redirection message is accessed. A frequency band in which the redirected frequency point is located is a specified frequency band. A third quantity of times is determined if access to the cell corresponding to the redirected frequency point fails. The third quantity of times is a quantity of times of failure of access to the cell corresponding to the redirected frequency point within a third preset duration prior to a current moment. A third policy is executed if the third quantity of times is greater than or equal to a third quantity of times threshold. The third policy is: accessing a cell and sending target information to the cell after the cell is accessed. The target information is used for indicating that the electronic device does not support the specified frequency band.

If the third quantity of times is greater than or equal to the third quantity of times threshold, it indicates that the electronic device has previously attempted multiple times to access the cell corresponding to the redirected frequency point but fails. In this case, it is reasonable to suspect that the frequency band (that is, the specified frequency band) in which the redirected frequency point is located has a problem. Therefore, in this application, after failing to access the cell corresponding to the redirected frequency point, the electronic device may first access a cell when the third quantity of times is greater than or equal to the third quantity of times threshold, and then send target information to the cell after accessing the cell. Since the target information indicates that the electronic device does not support the specified frequency band, the cell may learn, after receiving the target information, that the electronic device does not support the specified frequency band. Then, when redirection needs to be performed subsequently, it is highly probable that the redirected frequency point indicated by the cell may not be a frequency point in the specified frequency band. Therefore, the problem that the electronic device fails to access the cell corresponding to the redirected frequency point can be prevented to some extent. In this way, repeated redirection of the electronic device within a short time can be prevented to some extent, and then the problem of service stuttering or even interruption can be prevented to some extent.

It should be noted that, in this application, although the electronic device sends the target information to the cell to indicate that the electronic device does not support the specified frequency band, this is to prevent subsequent redirection of the electronic device to the specified frequency band by the cell, and does not mean that the electronic device actually does not support the specified frequency band. That is, even if the electronic device supports the specified frequency band, the electronic device also sends the target information to the cell in the foregoing situation, to make the cell consider that the electronic device does not support the specified frequency band.

Optionally, after receiving the redirection message, if the electronic device does not find the cell corresponding to the redirected frequency point carried in the redirection message, it is determined that access to the cell corresponding to the redirected frequency point carried in the redirection message fails.

During blind redirection, the target cell may directly specify a redirected frequency point. In this case, there may be no cell corresponding to the redirected frequency point nearby the electronic device. Consequently, the electronic device fails to access the cell corresponding to the redirected frequency point.

Optionally, the target information is UE capability information. An operation of sending, by the electronic device, the target information to the cell may be: sending a mobility registration updating message to the cell, the mobility registration updating message being used for indicating that the UE capability information needs to be updated; receiving a UE capability enquiry message sent by the cell; and sending the UE capability information to the cell, the UE capability information being used for indicating that the electronic device does not support the specified frequency band.

In this application, the electronic device may actively trigger a mobility registration updating procedure after accessing the cell, so that the cell queries for UE capability information. In this way, the electronic device may report the UE capability information to the cell, to indicate that the electronic device does not support the specified frequency band.

Optionally, the operation of determining the third quantity of times if the electronic device fails to access the cell corresponding to the redirected frequency point may be: determining, by the electronic device if access to the cell corresponding to the redirected frequency point fails, the third quantity of times when a cell identifier of the target cell is not a problem cell identifier and a frequency point of the target cell is not a problem frequency point. However, the third policy is executed when the cell identifier of the target cell is a problem cell identifier and/or the frequency point of the target cell is a problem frequency point.

According to a fourth aspect, a cell access method is provided. In the method, when accessing a first cell, an electronic device executes a fourth policy if measuring that signal quality of the first cell is lower than a signal quality threshold. The fourth policy is: sending a target event to the first cell. The target event is used for indicating that signal quality of an inter-system neighboring cell is higher than the signal quality threshold. Then, if receiving a redirection message sent by the first cell, the electronic device accesses a second cell corresponding to a redirected frequency point carried in the redirection message. The redirected frequency point carried in the redirection message is a frequency point of the second cell. The second cell is an inter-system neighboring cell of the first cell. Alternatively, if receiving a handover command originating from the first cell, the electronic device accesses a second cell indicated by the handover command.

For example, the target event is a B event, and the B event may be a B1 event or a B2 event.

It should be noted that, the electronic device should report an A2 event to the first cell when measuring that the signal quality of the first cell is lower than the signal quality threshold. However, in the related technology, after receiving the A2 event, the first cell may possibly instruct the electronic device to redirect to an intra-system frequency point of the first cell. Generally, a failure probability of accessing the intra-system frequency point of the first cell by the electronic device is higher than a failure probability of accessing an inter-system frequency point of the first cell. Therefore, the electronic device does not report the A2 event when measuring that the signal quality of the first cell is lower than the signal quality threshold, but reports the target event, to indicate that signal quality of the inter-system neighboring cell is higher than the signal quality threshold. After receiving the target event, the first cell learns that the signal quality of the inter-system neighboring cell is higher, so it is highly likely to subsequently instruct the electronic device to redirect or hand over to the inter-system neighboring cell.

In this application, the electronic device may report the target event to the first cell when the signal quality of the first cell is lower, to make the first cell instruct the electronic device to redirect or hand over to the second cell. Since the second cell is an inter-system neighboring cell of the first cell and a mobile communication technology standard supported by the second cell is lower than a mobile communication technology standard supported by the first cell, the electronic device actually falls back from the first cell to the second cell during redirection or handover. In this case, compared with accessing an intra-system neighboring cell of the first cell, the electronic device achieves a higher success rate when accessing the second cell. In this way, repeated redirection of the electronic device within a short time can be prevented to some extent, and then the problem of service stuttering or even interruption can be prevented to some extent.

Optionally, the operation of executing, by the electronic device, the fourth policy when measuring that the signal quality of the first cell is lower than the signal quality threshold may be: executing, if it is measured that the signal quality of the first cell is lower than the signal quality threshold, the fourth policy when a cell identifier of the first cell is a problem cell identifier and/or a frequency point of the first cell is a problem frequency point.

Optionally, the operation of executing, by the electronic device, the fourth policy when measuring that the signal quality of the first cell is lower than the signal quality threshold may be: executing, if it is measured that the signal quality of the first cell is lower than the signal quality threshold, the fourth policy when all policies in a first preset policy have been executed within a fifth preset duration prior to a current moment. The first preset policy includes one or more of a first policy, a second policy, and a third policy.

According to a fifth aspect, a cell access method is provided. In the method, an electronic device receives a redirection message sent by a first cell. Then, a cell corresponding to a redirected frequency point carried in the redirection message is accessed. If access to the cell corresponding to the redirected frequency point fails, a fifth policy is executed when the redirection message is a blind redirection message. The fifth policy is: accessing a second cell. The second cell is an inter-system neighboring cell of the first cell.

Since the redirected frequency point carried in the blind redirection message is directly specified by the first cell, when the electronic device fails to access the cell corresponding to the redirected frequency point carried in the blind redirection message, it is reasonable to suspect that intra-system neighboring cells of the first cell are all likely to have the problem. Therefore, in this application, when failing to access the cell corresponding to the redirected frequency point carried in the blind redirection message, the electronic device directly accesses an inter-system neighboring cell of the first cell, that is, the second cell.

After the electronic device accesses the second cell, on the one hand, the problem of re-redirection caused by low cell signal quality can be prevented to some extent. On the other hand, even if redirection needs to be performed subsequently, since it is highly probable that a redirected frequency point indicated by the second cell is different from a redirected frequency point indicated by the first cell, a problem that the electronic device fails to access the cell corresponding to the redirected frequency point can be prevented to some extent. In this way, repeated redirection of the electronic device within a short time can be prevented to some extent, and then the problem of service stuttering or even interruption can be prevented to some extent.

Optionally, the operation of accessing, by the electronic device, the cell corresponding to the redirected frequency point carried in the redirection message may be: accessing the cell corresponding to the redirected frequency point if a cell identifier of the first cell is not a problem cell identifier and a frequency point of the first cell is not a problem frequency point; and accessing, if the cell identifier of the first cell is a problem cell identifier and/or the frequency point of the first cell is a problem frequency point, the cell corresponding to the redirected frequency point when the redirection message is a measurement redirection message. Correspondingly, after receiving the redirection message sent by the first cell, if the cell identifier of the first cell is a problem cell identifier and/or the frequency point of the first cell is a problem frequency point, the electronic device executes the fifth policy when the redirection message is a blind redirection message.

Since the redirected frequency point carried in the measurement redirection message is determined by the first cell according to related cell signal quality reported by the electronic device, the electronic device achieves a higher success rate when accessing the cell corresponding to the redirected frequency point carried in the measurement redirection message. Therefore, when the redirection message is the measurement redirection message, the electronic device may access the cell corresponding to the redirected frequency point carried in the redirection message.

Since the redirected frequency point carried in the blind redirection message is directly specified by the first cell, when the cell identifier of the first cell is a problem cell identifier and/or the frequency point of the first cell is a problem frequency point, the electronic device generally achieves a lower success rate when accessing the cell corresponding to the redirected frequency point carried in the blind redirection message. Therefore, in this application, when the cell identifier of the first cell is a problem cell identifier and/or the frequency point of the first cell is a problem frequency point and the redirection message is a blind redirection message, the electronic device accesses the second cell instead of accessing the cell corresponding to the redirected frequency point carried in the redirection message. The second cell is an inter-system neighboring cell of the first cell and a mobile communication technology standard supported by the second cell is lower than a mobile communication technology standard supported by the first cell. In this case, the electronic device actually falls back from the first cell to the second cell during redirection. In this case, compared with accessing the cell corresponding to the redirected frequency point directly specified by the first cell in the blind redirection message, the electronic device achieves a higher success rate when accessing the second cell. In this way, repeated redirection of the electronic device within a short time can be prevented to some extent, and then the problem of service stuttering or even interruption can be prevented to some extent.

Optionally, the operation of accessing, by the electronic device, the cell corresponding to the redirected frequency point carried in the redirection message may be: accessing the cell corresponding to the redirected frequency point if not all policies in a second preset policy have been executed within a fifth preset duration prior to a current moment. The second preset policy includes one or more of a first policy, a second policy, a third policy, and a fourth policy.

Correspondingly, after receiving the redirection message sent by the first cell, if all policies in the second preset policy have been executed within the fifth preset duration prior to the current moment, the electronic device executes the fifth policy when the redirection message is a blind redirection message.

According to a sixth aspect, a cell access method is provided. In the method, when accessing a target cell, the electronic device determines, if measuring that signal quality of the target cell is lower than a signal quality threshold, a fourth quantity of times when the signal quality of the target cell is lower than preset signal quality, the fourth quantity of times being a quantity of times of failure of access to a cell corresponding to a redirected frequency point carried in a redirection message within a fourth preset duration prior to a current moment, and the preset signal quality being signal quality capable of triggering blind redirection; and executes a sixth policy if the fourth quantity of times is greater than or equal to a fourth quantity of times threshold, the sixth policy being: not sending an A2 event to the target cell.

When the signal quality of the target cell is lower than the preset signal quality, if the electronic device reports the A2 event, the target cell may possibly be triggered to perform blind redirection. If the fourth quantity of times is greater than or equal to the fourth quantity of times threshold, it indicates that the electronic device attempts multiple times to access the cell corresponding to the redirected frequency point carried in the redirection message but fails. In this case, if the electronic device reports the A2 event to trigger blind redirection, the electronic device may still fail to access the cell corresponding to the redirected frequency point carried in the redirection message, which may lead to obvious service stuttering or even interruption. Therefore, in this application, the electronic device does not report the A2 event in this case, to prevent triggering of blind redirection. In this way, the problem of service stuttering or even interruption can be prevented to some extent. It should be noted that, although current signal quality of the target cell is poor, the electronic device can continue a service by maintaining access to the target cell. Compared with the problem of obvious service stuttering or even interruption caused by impossible access of the electronic device to the cell for a period of time due to failure of access after blind redirection, the electronic device maintaining access to the target cell is obviously more conducive to the service.

Optionally, the operation of determining, by the electronic device if measuring that the signal quality of the target cell is lower than the signal quality threshold, the fourth quantity of times when the signal quality of the target cell is lower than the preset signal quality may be: determining, if it is measured that the signal quality of the target cell is lower than the signal quality threshold, the fourth quantity of times when the signal quality of the target cell is lower than the preset signal quality and a cell identifier of the target cell is not a problem cell identifier and a frequency point of the target cell is not a problem frequency point.

Correspondingly, if measuring that the signal quality of the target cell is lower than the signal quality threshold, the electronic device executes the sixth policy when the signal quality of the target cell is lower than the preset signal quality and the cell identifier of the target cell is a problem cell identifier and/or the frequency point of the target cell is a problem frequency point.

Optionally, the operation of determining, by the electronic device if measuring that the signal quality of the target cell is lower than the signal quality threshold, the fourth quantity of times when the signal quality of the target cell is lower than the preset signal quality may be: determining, if it is measured that the signal quality of the target cell is lower than the signal quality threshold, the fourth quantity of times when the signal quality of the target cell is lower than the preset signal quality and all policies in a third preset policy have been executed within a fifth preset duration prior to a current moment. The third preset policy includes one or more of a first policy, a second policy, a third policy, a fourth policy, and a fifth policy.

According to a seventh aspect, a chip system is provided. The chip system is applied to an electronic device, and the chip system includes one or more processors. The processor is configured to invoke a computer instruction to cause the electronic device to perform the foregoing cell access method.

According to an eighth aspect, a cell access apparatus is provided. The cell access apparatus has a function of implementing the foregoing cell access method. The cell access apparatus includes at least one module, and the at least one module is configured to implement the foregoing cell access method.

According to a ninth aspect, an electronic device is provided. The electronic device includes a memory, a processor, and a computer program stored in the memory and executable on the processor. When the computer program is executed by the processor, the foregoing cell access method is implemented.

According to a tenth aspect, a computer-readable storage medium is provided. The computer-readable storage medium has instructions stored therein. When the instructions are run on a computer, the computer is caused to perform the foregoing cell access method.

According to an eleventh aspect, a computer program product including instructions is provided. When the instructions are run on a computer, the computer is caused to perform the foregoing cell access method.

Technical effects achieved in the seventh aspect to the eleventh aspect are similar to technical effects achieved by corresponding technical means in the first aspect to the sixth aspect. Details are not described herein again.

### BRIEF DESCRIPTION OF DRAWINGS

FIG. 1 is a schematic diagram of a communication system according to an embodiment of this application;
FIG. 2 is a flowchart of a redirection process according to an embodiment of this application;
FIG. 3 is a flowchart of a cell access method according to an embodiment of this application;
FIG. 4 is a schematic diagram of a cell access process according to an embodiment of this application;
FIG. 5 is a flowchart of another cell access method according to an embodiment of this application;
FIG. 6 is a flowchart of another cell access method according to an embodiment of this application;
FIG. 7 is a flowchart of another cell access method according to an embodiment of this application;
FIG. 8 is a schematic diagram of another communication system according to an embodiment of this application;
FIG. 9 is a schematic diagram of another cell access process according to an embodiment of this application;
FIG. 10 is a flowchart of another cell access method according to an embodiment of this application;
FIG. 11 is a flowchart of another cell access method according to an embodiment of this application;
FIG. 12 is a flowchart of another cell access method according to an embodiment of this application;
FIG. 13 is a flowchart of another cell access method according to an embodiment of this application;
FIG. 14 is a flowchart of another cell access method according to an embodiment of this application;
FIG. 15 is a flowchart of another cell access method according to an embodiment of this application;
FIG. 16 is a flowchart of another cell access method according to an embodiment of this application;
FIG. 17 is a flowchart of another cell access method according to an embodiment of this application;
FIG. 18 is a flowchart of another cell access method according to an embodiment of this application;
FIG. 19 is a schematic structural diagram of an electronic device according to an embodiment of this application; and
FIG. 20 is a block diagram of a software structure of an electronic device according to an embodiment of this application.

### DESCRIPTION OF EMBODIMENTS

To make the objectives, technical solutions, and advantages of this application clearer, the following further describes implementations of this application in detail with reference to the accompanying drawings.

It should be understood that "multiple/a plurality of" mentioned in this application means two or more. In the description of this application, unless otherwise specified, "/" means "or". For example, A/B may represent A or B. Herein, "and/or" is merely an association relationship for describing associated objects and represents that three relationships may exist. For example, "A and/or B" may represent the following three cases: only A exists, both A and B exist, and only B exists. In addition, to clearly describe the technical solutions of this application, words such as "first" and "second" are used to distinguish same items or similar items with basically same functions and effects. A person skilled in the art may understand that the words such as "first" and "second" do not limit a quantity or an execution order, and the words such as "first" and "second" do not necessarily indicate a specific difference.

Statements such as "one embodiment" or "some embodiments" described in this application mean that a specific characteristic, structure or feature described in this embodiment is included in one or more embodiments of this application. Therefore, statements "in one embodiment", "in some embodiments", "in some other embodiments", "in other embodiments", and the like in different places in this application do not necessarily refer to the same embodiment, but mean that "one or more but not all embodiments", unless otherwise specially emphasized in other ways. In addition, the terms "include", "comprise", and "have", and their variations mean "including, but not limited to", unless otherwise specially emphasized in other ways.

The following describes a system architecture as referred to in embodiments of this application.

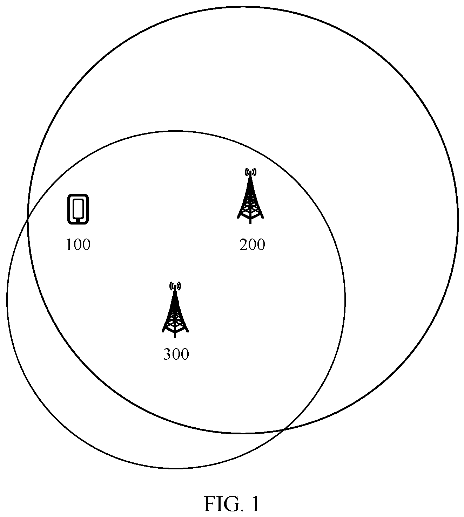

FIG. 1 is a schematic diagram of a communication system according to an embodiment of this application. Referring to FIG. 1, the communication system may include an electronic device 100, a first cell 200, and a second cell 300.

One or more first cells 200 may be provided. One or more second cells 300 may also be provided.

The electronic device 100 is within a coverage area of the first cell 200 and is within a coverage area of the second cell 300. The electronic device 100 may access one first cell 200 or one second cell 300.

The electronic device 100 may also be referred to as a UE. The electronic device 100 may support a plurality of mobile communication technology standards, for example, may support a second generation mobile communication technology (2th generation mobile networks, 2G) standard, a third generation mobile communication technology (3th generation mobile networks, 3G) standard, a fourth generation mobile communication technology (4th generation mobile networks, 4G) standard, a fifth generation mobile communication technology (5th generation mobile networks, 5G) standard, and the like. The 4G standard may also be referred to as a long term evolution (long term evolution, LTE) standard.

For example, the electronic device 100 may be a mobile terminal (mobile terminal, MT), a mobile station (mobile station, MS), a mobile unit (mobile unit, MU), a wireless unit, a remote unit, a user agent, a mobile client, or the like. For example, the electronic device 100 may be a mobile phone, a tablet computer, a wearable electronic device, a digital camera, a vehicle-mounted device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), a laptop (laptop), or the like, which is not limited in this embodiment of this application.

The second cell 300 is an inter-system neighboring cell of the first cell 200. That is, mobile communication technology standards supported by the first cell 200 and the second cell 300 are different. Moreover, the mobile communication technology standard supported by the first cell 200 is higher than the mobile communication technology standard supported by the second cell 300. For example, the first cell 200 supports the 5G standard, in which case the first cell 200 may be referred to as a 5G cell. The second cell 300 supports the 4G standard, in which case the second cell 300 may be referred to as a 4G cell. In another example, the first cell 200 supports the 4G standard, in which case the first cell 200 may be referred to as a 4G cell. The second cell 300 supports the 3G standard, in which case the second cell 300 may be referred to as a 3G cell. Optionally, the 5G cell may also be referred to as a new radio (new radio, NR) cell. The 4G cell may also be referred to as an LTE cell.

When the electronic device 100 accesses one of the first cell 200 and the second cell 300, the electronic device 100 may communicate with the cell. The electronic device 100 communicating with the cell means communicating with a base station of the cell. For example, when the electronic device 100 accesses a 3G cell, the electronic device 100 communicates with a base station (node B, NB) of the 3G cell. When the electronic device 100 accesses a 4G cell, the electronic device 100 communicates with an evolved base station (evolutional node B, eNB) of the 4G cell. When the electronic device 100 accesses a 5G cell, the electronic device 100 communicates with a next generation base station (next generation node B, gNB) of the 5G cell.

It should be noted that, in this embodiment of this application, the electronic device 100 may support a first mobile communication technology standard and a second mobile communication technology standard, and the first mobile communication technology standard is higher than the second mobile communication technology standard. Moreover, the first mobile communication technology standard is the mobile communication technology standard supported by the first cell 200, and the second mobile communication technology standard is the mobile communication technology standard supported by the second cell 300. In some embodiments, the first mobile communication technology standard may be the highest mobile communication technology standard in the plurality of mobile communication technology standards that can be supported by the electronic device 100. In this embodiment of this application, a network based on the first mobile communication technology standard is referred to as a first network, and a network based on the second mobile communication technology standard is referred to as a second network.

After the electronic device 100 accesses either of the first cell 200 and the second cell 300, the cell that the electronic device 100 accesses may be referred to as a serving cell of the electronic device 100. Currently, the electronic device 100 may report an A2 event to the serving cell when signal quality of the serving cell is lower than a threshold, to expect the serving cell to issue an indication to instruct the electronic device 100 to hand over to another cell. After receiving the A2 event reported by the electronic device 100, the serving cell may send a redirection message to the electronic device 100. However, when receiving the redirection message, the electronic device 100 easily has a problem of failing to access a cell corresponding to a redirected frequency point carried in the redirection message.

Next, a redirection process of the electronic device is exemplarily described with an example in which the serving cell is a 5G cell.

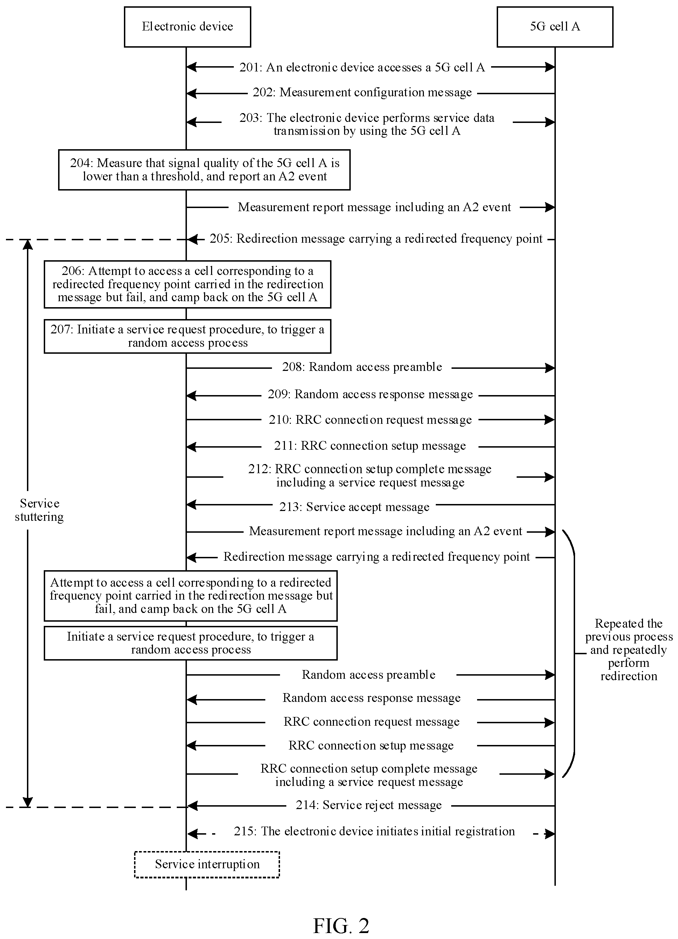

FIG. 2 is a flowchart of a redirection process according to an embodiment of this application. Referring to FIG. 2, the redirection process may include the following step 201 to step 215.

Step 201: An electronic device accesses a 5G cell A.

When the electronic device accesses the 5G cell A, the electronic device is in a radio resource control (radio resource control, RRC) connected (connected) state. In this case, the electronic device camps on the 5G cell A.

Step 202: The 5G cell A sends a measurement configuration message to the electronic device.

For example, the measurement configuration message may be an RRC connection reconfiguration (connection reconfigurtion) message carrying a measurement configuration (measConfig) information element.

The measurement configuration message is used for instructing the electronic device to measure signal quality of a serving cell. The serving cell herein is the 5G cell A. For example, the measurement configuration message may include A2 event information. The A2 event information may include a threshold of an A2 event. The A2 event is used for indicating that the signal quality of the serving cell is lower than the threshold.

After receiving the measurement configuration message sent by the 5G cell A, the electronic device may measure signal quality of the 5G cell A.

Step 203: The electronic device performs service data transmission by using the 5G cell A.

Step 204: The electronic device measures that signal quality of the 5G cell A is lower than a threshold, and reports an A2 event.

For example, when measuring that the signal quality of the 5G cell A is lower than the threshold, the electronic device may send a measurement report (measurement report, MR) message including the A2 event to the 5G cell A.

Step 205: The 5G cell A sends a redirection message to the electronic device.

For example, the redirection message may be an RRC connection release (connection release) message carrying a redirected frequency point (redirectedCarrierInfo) information element. The redirected frequency point information element may include a redirected frequency point.

Step 206: The electronic device attempts to access a cell corresponding to a redirected frequency point carried in the redirection message but fails, and camps back on the 5G cell A.

After receiving the redirection message, the electronic device releases an RRC connection with the 5G cell A. After the RRC connection is released, the electronic device is in an RRC idle state. Then, the electronic device searches for a cell corresponding to the redirected frequency point and attempts to access the cell. In some cases, since the cell corresponding to the redirected frequency point cannot be found, the electronic device may fail to access the cell. Certainly, the electronic device may alternatively fail to access the cell due to influences of other factors. This is not limited in this embodiment of this application.

When the electronic device fails to access the cell corresponding to the redirected frequency point, the electronic device is highly likely to camp back on a source cell, that is, camp back on the 5G cell A.

Step 207: The electronic device initiates a service request (service request) procedure, to trigger a random access process.

In some embodiments, when in the RRC idle state, the electronic device may initiate the service request procedure if there is user data or a signaling message that needs to be sent. To implement a service request, the electronic device needs to access a cell. Therefore, the random access process is triggered. In this embodiment of this application, the random access process means that the electronic device accesses the 5G cell A in a random access manner (including, but not limited to, a contention-based random access manner).

For example, the random access process may include the following step 208 to step 212.

Step 208: The electronic device sends a random access preamble (random access preamble) to the 5G cell A.

For example, the electronic device may carry the random access preamble in an MSG1 message and send the MSG1 message to the 5G cell A.

Step 209: The 5G cell A sends a random access response (random access response) message to the electronic device after receiving the random access preamble.

For example, the random access response message may also be referred to as an MSG2 message.

Step 210: The electronic device sends an RRC connection request (connection request) message to the 5G cell A after receiving the random access response message.

For example, the RRC connection request message may also be referred to as an MSG3 message.

Step 211: The 5G cell A sends an RRC connection setup (connection setup) message to the electronic device after receiving the RRC connection request message.

For example, the RRC connection setup message may also be referred to as an MSG4 message.

Step 212: The electronic device sends an RRC connection setup complete (connection setup complete) message to the 5G cell A after receiving the RRC connection setup message.

For example, the RRC connection setup complete message includes a service request message of a non-access stratum (non-access stratum, NAS) layer.

Step 213: The 5G cell A sends a service accept (service accept) message of the NAS layer to the electronic device after receiving the RRC connection setup complete message.

In some embodiments, after receiving the service request message, the 5G cell A may send the service request message to a core network. After receiving the service request message, the core network performs related processing, and then sends the service accept message to the electronic device by using the 5G cell A.

After receiving the service accept message, the electronic device may perform service data transmission by using the 5G cell A.

However, due to lower signal quality of the 5G cell A, step 204 to step 207 may be repeated. Specifically, when the signal quality of the 5G cell A is lower than the threshold, the electronic device may still report the A2 event. Next, the 5G cell A sends a redirection message to the electronic device again. The electronic device may probably fail again when attempting to access a cell corresponding to a redirected frequency point carried in the redirection message, and may camp back on the 5G cell A again. Then, the electronic device may initiate a service request procedure again, to trigger a random access process. Later, the foregoing procedure may still be repeated due to the lower signal quality of the 5G cell A, resulting in repeated redirection.

Generally, after the electronic device repeatedly initiates a service request procedure multiple times within a short time, the electronic device further sends a service request message to the 5G cell A in the random access process, and then the core network may return a service reject (service reject) message to the electronic device by using the 5G cell A.

Step 214: The 5G cell A sends a service reject message to the electronic device.

For example, a reject cause value carried in the service reject message may be #10 implicitly detached (implicitly detached).

Step 215: The electronic device initiates initial registration after receiving the service reject message.

As can be seen from the foregoing embodiment in FIG. 2, a main problem with the above procedure is that in step 206, the electronic device attempts to access the cell corresponding to the redirected frequency point carried in the redirection message, but fails. The failure of access of the electronic device may cause obvious service stuttering and may lead to subsequent repeated redirection of the electronic device, causing continuous service stuttering. In addition, repeated redirection of the electronic device may cause repeated initiation of the service request procedure. Consequently, the core network sends a service reject message to the electronic device, which may cause service interruption, for example, may cause call drop during a call.

Therefore, an embodiment of this application provides a cell access method to resolve the above problems, so as to prevent the phenomenon of service stuttering or even interruption to some extent.

The cell access method provided in this embodiment of this application is described in detail below.

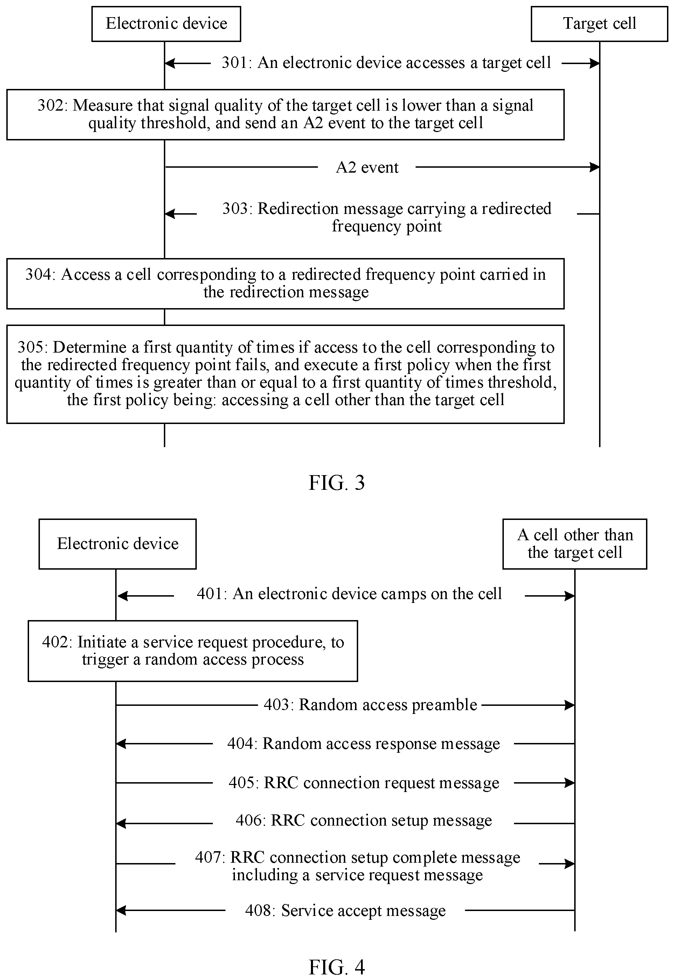

FIG. 3 is a flowchart of a cell access method according to an embodiment of this application. Referring to FIG. 3, the method includes the following steps:
Step 301: An electronic device accesses a target cell.

The target cell may be a first cell or a second cell. The first cell and the second cell are described in detail in the foregoing embodiment in FIG. 1, and details are not described in this embodiment of this application again.

When the electronic device accesses the target cell, the electronic device is in an RRC connected state. In this case, the electronic device camps on the target cell. The target cell is a current serving cell of the electronic device.

It should be noted that, after accessing the target cell, the electronic device may perform service data transmission by using the target cell. For example, after accessing the target cell, the electronic device may make a call, and may perform call data transmission during the call by using the target cell. Alternatively, after accessing the target cell, the electronic device may browse a web page, and may perform web page data transmission during the web page browsing by using the target cell.

Step 302: The electronic device measures that signal quality of the target cell is lower than a signal quality threshold, and sends an A2 event to the target cell.

After the electronic device accesses the target cell, the target cell may send a measurement configuration message to the electronic device. The measurement configuration message is used for instructing the electronic device to measure signal quality of the serving cell. After receiving the measurement configuration message, the electronic device may measure the signal quality of the target cell, and report the A2 event to the target cell when the signal quality of the target cell is lower than the signal quality threshold. For example, the electronic device may send a measurement report message including the A2 event to the target cell.

For example, the measurement configuration message may be an RRC connection reconfiguration message carrying a measurement configuration information element. The measurement configuration information element may include A2 event information. The A2 event information may include a threshold of an A2 event. The A2 event is used for indicating that the signal quality of the serving cell is lower than the threshold.

The signal quality threshold may be preset. Optionally, the signal quality threshold may be a threshold of the A2 event included in the measurement configuration message.

Signal quality of a cell may be characterized by using one or more features of a cell signal. For example, the signal quality of the cell may be reference signal received power (reference signal received power, RSRP) of the cell, or reference signal received quality (reference signal received quality, RSRQ) of the cell, or a signal to interference plus noise ratio (signal to interference plus noise ratio, SINR) of the cell, or a received signal strength indication (received signal strength indication, RSSI) of the cell. Certainly, the signal quality of the cell may alternatively be characterized jointly by two or more of the RSRP, the RSRQ, the SINR, and the RSSI of the cell, which is not limited in this embodiment of this application.

Step 303: The target cell sends a redirection message to the electronic device.

For example, the redirection message may be an RRC connection release message carrying a redirected frequency point information element. The redirected frequency point information element may include a redirected frequency point.

Optionally, the redirected frequency point may be an intra-system frequency point of the target cell or may be an inter-system frequency point of the target cell. For example, if the target cell is a 5G cell, the redirected frequency point may be a 5G frequency point or a 4G frequency point.

It should be noted that redirection is generally categorized into blind redirection and measurement redirection.

In some embodiments, after receiving the A2 event sent by the electronic device, the target cell may directly specify a redirected frequency point, and then directly send a redirection message carrying the redirected frequency point to the electronic device, to instruct the electronic device to hand over to a cell corresponding to the redirected frequency point. The redirection process is a blind redirection process.

In some other embodiments, after receiving the A2 event sent by the electronic device, the target cell first sends a measurement configuration message to the electronic device, to instruct the electronic device to measure and report cell signal quality corresponding to a related frequency point. After receiving the cell signal quality reported by the electronic device, the target cell determines a redirected frequency point accordingly, and then sends a redirection message carrying the redirected frequency point to the electronic device, to instruct the electronic device to hand over to a cell corresponding to the redirected frequency point. The redirection process is a measurement redirection process.

Step 304: After receiving the redirection message, the electronic device accesses a cell corresponding to a redirected frequency point carried in the redirection message.

After receiving the redirection message, the electronic device releases an RRC connection with the target cell. After the RRC connection is released, the electronic device is in an RRC idle state. Then, the electronic device searches for a cell corresponding to the redirected frequency point and attempts to access the cell.

In some embodiments, if the electronic device does not find the cell corresponding to the redirected frequency point, it may be determined that access to the cell corresponding to the redirected frequency point fails. During blind redirection, the target cell may directly specify a redirected frequency point. In this case, there may be no cell corresponding to the redirected frequency point nearby the electronic device. Consequently, the electronic device fails to access the cell corresponding to the redirected frequency point.

Certainly, the electronic device may alternatively fail to access the cell corresponding to the redirected frequency point due to influences of other factors, which is not limited in this embodiment of this application.

Step 305: Determine a first quantity of times if the electronic device fails to access the cell corresponding to the redirected frequency point, and execute a first policy when the first quantity of times is greater than or equal to a first quantity of times threshold, the first policy being: accessing a cell other than the target cell.

The first quantity of times is a quantity of times of failure of access to the cell corresponding to the redirected frequency point indicated by the target cell within a first preset duration prior to a current moment. The first preset duration may be preset. For example, the first preset duration may be 2 seconds, 3 seconds, or the like, which is not limited in this embodiment of this application.

It should be noted that the "first quantity of times" described in this embodiment of this application is determined based on the redirection message, and is used for indicating a quantity of times of failure of redirection. That is, after the target cell sends a redirection message to the electronic device, if the electronic device does not successfully access a cell corresponding to a redirected frequency point carried in the redirection message, the electronic device determines that a redirection failure occurs, which may be counted towards the first quantity of times corresponding to the target cell. That is, even if the electronic device finds a plurality of cells corresponding to the redirected frequency point carried in the redirection message, access to the plurality of cells all fails, so the electronic device also determines that a redirection failure occurs.

The first quantity of times threshold may be preset. For example, the first quantity of times threshold may be 2, 3, or the like, which is not limited in this embodiment of this application.

In some embodiments, after the electronic device determines the first quantity of times, if the first quantity of times is less than the first quantity of times threshold, the electronic device accesses a cell. In this case, the electronic device may perform a cell search, and select a proper cell from the found cells to camp on and access. In this case, the accessed cell may be the target cell or may not be the target cell.

If the first quantity of times is greater than or equal to the first quantity of times threshold, it indicates that the electronic device attempts multiple times to access the cell corresponding to the redirected frequency point indicated by the target cell within a short time but fails. In this case, it is reasonable to suspect that this problem is likely caused by the target cell. Therefore, in this embodiment of this application, after failing to access the cell corresponding to the redirected frequency point, the electronic device may be barred from returning to the target cell, that is, may access a cell other than the target cell, if the first quantity of times is greater than or equal to the first quantity of times threshold. The cell may be an intra-system neighboring cell of the target cell or may be an inter-system neighboring cell of the target cell. For example, if the target cell is a 5G cell, the cell may be a 5G cell or a 4G cell.

For example, after failing to access the cell corresponding to the redirected frequency point, the electronic device may bar the target cell in a cell selection procedure or a cell reselection procedure when the first quantity of times is greater than or equal to the first quantity of times threshold, to select a cell other than the target cell to camp on and access.

After the electronic device accesses a cell other than the target cell, on the one hand, the problem of re-redirection caused by low cell signal quality can be prevented to some extent. On the other hand, even if redirection needs to be performed subsequently, since it is highly probable that a redirected frequency point indicated by the cell other than the target cell is different from the redirected frequency point indicated by the target cell, a problem that the electronic device fails to access the cell corresponding to the redirected frequency point can be prevented to some extent. In this way, repeated redirection of the electronic device within a short time can be prevented to some extent, and then the problem of service stuttering or even interruption can be prevented to some extent.

In some embodiments, in step 305, the electronic device may access a cell other than the target cell in a random access manner (including, but not limited to, a contention-based random access manner). Next, a possible implementation in which the electronic device accesses the cell is exemplarily described below with reference to FIG. 4.

FIG. 4 is a schematic diagram of a cell access process according to an embodiment of this application. Referring to FIG. 4, the cell access process may include the following step 401 to step 408.

Step 401: An electronic device camps on a cell other than a target cell.

After the electronic device performs a cell search, if finding a cell other than the target cell and determining to access the cell, the electronic device may first camp on the cell and then access the cell.

Step 402: The electronic device initiates a service request procedure, to trigger a random access process.

In some embodiments, when in the RRC idle state, the electronic device may initiate the service request procedure if there is user data or a signaling message that needs to be sent. To implement a service request, the electronic device needs to access the cell. Therefore, the random access process may be triggered.

For example, the random access process may include the following step 403 to step 408.

Step 403: The electronic device sends a random access preamble to the cell.

For example, the electronic device may carry the random access preamble in an MSG1 message and send the MSG1 message to the cell.

Step 404: The cell sends a random access response message to the electronic device after receiving the random access preamble.

For example, the random access response message may also be referred to as an MSG2 message.

Step 405: The electronic device sends an RRC connection request message to the cell after receiving the random access response message.

For example, the RRC connection request message may also be referred to as an MSG3 message.

Step 406: The cell sends an RRC connection setup message to the electronic device after receiving the RRC connection request message.

For example, the RRC connection setup message may also be referred to as an MSG4 message.

Step 407: The electronic device sends an RRC connection setup complete message to the cell after receiving the RRC connection setup message.

For example, the RRC connection setup complete message includes a service request message of a NAS layer.

Step 408: The cell sends a service accept message of a NAS layer to the electronic device after receiving the RRC connection setup complete message.

In some embodiments, after receiving the service request message, the cell may send the service request message to a core network. After receiving the service request message, the core network performs related processing, and then may send the service accept message to the electronic device by using the cell.

After receiving the service accept message, the electronic device may perform service data transmission by using the cell.

It should be noted that, in this embodiment of this application, the process in which the electronic device accesses a cell other than the target cell is exemplarily described merely by using the foregoing embodiment in FIG. 4 as an example, and the foregoing embodiment in FIG. 4 does not constitute a limitation on this embodiment of this application. The electronic device may alternatively access a cell other than the target cell in another manner different from that in the foregoing embodiment in FIG. 4, which is not limited in this embodiment of this application.

In some embodiments, after determining the first quantity of times, the electronic device may further record a cell identifier (including, but not limited to, a physical cell identifier (physical cell identifier, PCI), and the like) of the target cell as a problem cell identifier when the first quantity of times is greater than or equal to a first quantity of times threshold. The electronic device may record one or more problem cell identifiers. In the cell selection procedure and the cell reselection procedure, the electronic device may attempt to avoid selecting a cell identified by a problem cell identifier, and may attempt to avoid measuring and reporting the cell identified by the problem cell identifier during cell measurement and reporting, so as to attempt to avoid accessing the cell identified by the problem cell identifier.

In some cases, the electronic device may still access the cell identified by the problem cell identifier. For example, assuming that a current serving cell of the electronic device is the target cell, the target cell may be a cell identified by a problem cell identifier previously recorded by the electronic device.

In this case, after the target cell sends the redirection message to the electronic device, in step 305, if the electronic device fails to access the cell corresponding to the redirected frequency point carried in the redirection message, the electronic device may determine the first quantity of times when determining that the cell identifier of the target cell is not the recorded problem cell identifier, and execute a first policy when the first quantity of times is greater than or equal to the first quantity of times threshold, to access a cell other than the target cell. However, when determining that the cell identifier of the target cell is the recorded problem cell identifier, the electronic device may directly execute the first policy without determining the first quantity of times, to access the cell other than the target cell.

In this embodiment of this application, after receiving the redirection message sent by the target cell, the electronic device may determine the first quantity of times if failing to access the cell corresponding to the redirected frequency point carried in the redirection message. The first quantity of times is a quantity of times of failure of access to the cell corresponding to the redirected frequency point indicated by the target cell within a first preset duration prior to a current moment. If the first quantity of times is greater than or equal to the first quantity of times threshold, it indicates that the electronic device attempts multiple times to access the cell corresponding to the redirected frequency point indicated by the target cell within a short time but fails. In this case, the electronic device accesses a cell other than the target cell. In this way, subsequent re-occurrence of redirection may be prevented to some extent. In addition, even if redirection occurs subsequently, a problem that the electronic device fails to access the cell corresponding to the redirected frequency point may also be prevented to some extent. In this way, repeated redirection of the electronic device within a short time can be prevented to some extent, and then the problem of service stuttering or even interruption can be prevented to some extent.

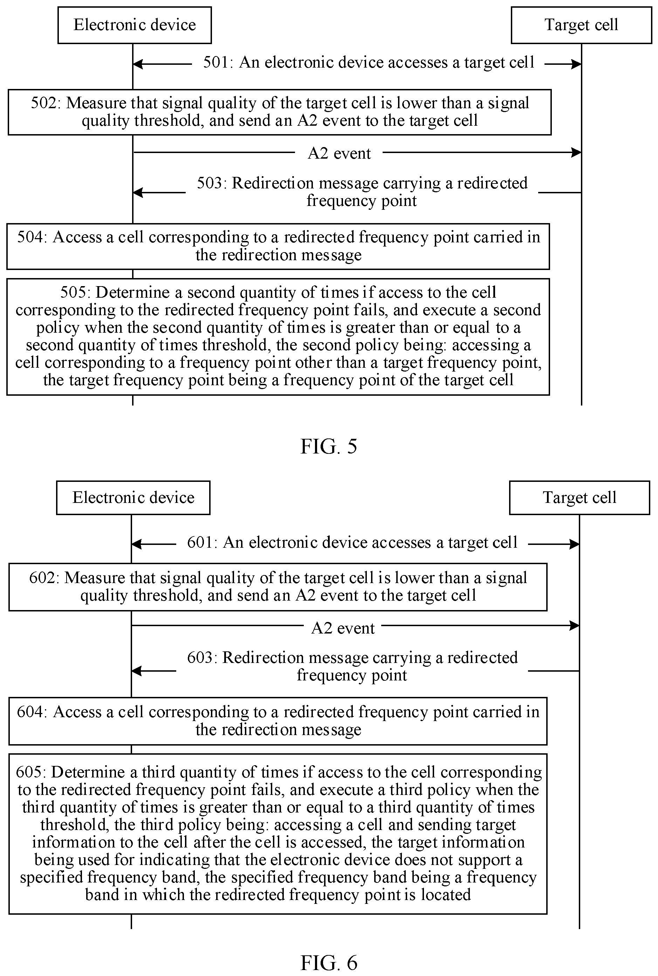

FIG. 5 is a flowchart of a cell access method according to an embodiment of this application. Referring to FIG. 5, the method includes the following steps:
Step 501: An electronic device accesses a target cell.

The operation of step 501 is similar to the operation of step 301 in the foregoing embodiment in FIG. 3, and details are not described herein again in this embodiment of this application.

Step 502: The electronic device measures that signal quality of the target cell is lower than a signal quality threshold, and sends an A2 event to the target cell.

The operation of step 502 is similar to the operation of step 302 in the foregoing embodiment in FIG. 3, and details are not described herein again in this embodiment of this application.

Step 503: The target cell sends a redirection message to the electronic device.

The operation of step 503 is similar to the operation of step 303 in the foregoing embodiment in FIG. 3, and details are not described herein again in this embodiment of this application.

Step 504: After receiving the redirection message, the electronic device accesses a cell corresponding to a redirected frequency point carried in the redirection message.

The operation of step 504 is similar to the operation of step 304 in the foregoing embodiment in FIG. 3, and details are not described herein again in this embodiment of this application.

Step 505: Determine a second quantity of times if the electronic device fails to access the cell corresponding to the redirected frequency point, and execute a second policy when the second quantity of times is greater than or equal to a second quantity of times threshold, the second policy being: accessing a cell corresponding to a frequency point other than a target frequency point, the target frequency point being a frequency point of the target cell.

The second quantity of times is a quantity of times of failure of access to a cell corresponding to a redirected frequency point indicated by a cell corresponding to the target frequency point within a second preset duration prior to the current moment. The second preset duration may be preset. For example, the second preset duration may be 2 seconds, 3 seconds, 4 seconds, or the like, which is not limited in this embodiment of this application.

It should be noted that the "second quantity of times" described in this embodiment of this application is determined based on the redirection message, and is used for indicating a quantity of times of failure of redirection. That is, after a cell corresponding to the target frequency point sends a redirection message to the electronic device, if the electronic device does not successfully access a cell corresponding to a redirected frequency point carried in the redirection message, the electronic device determines that a redirection failure occurs, which may be counted towards the second quantity of times corresponding to the target frequency point. That is, even if the electronic device finds a plurality of cells corresponding to the redirected frequency point carried in the redirection message, access to the plurality of cells all fails, so the electronic device also determines that a redirection failure occurs.

The second quantity of times threshold may be preset. For example, the second quantity of times threshold may be 2, 3, 4, or the like, which is not limited in this embodiment of this application.

In some embodiments, after the electronic device determines the second quantity of times, if the second quantity of times is less than the second quantity of times threshold, the electronic device accesses a cell. In this case, the electronic device may perform a cell search, and select a proper cell from the found cells to camp on and access. In this case, the accessed cell may be the cell corresponding to the target frequency point or may not be the cell corresponding to the target frequency point.

If the second quantity of times is greater than or equal to the second quantity of times threshold, it indicates that the electronic device attempts multiple times to access the cell corresponding to the redirected frequency point indicated by the cell corresponding to the target frequency point within a short time but fails. In this case, it is reasonable to suspect that cells corresponding to the target frequency point are all likely to have this problem. Therefore, in this embodiment of this application, after failing to access the cell corresponding to the redirected frequency point, the electronic device may be barred from returning to the target frequency point, that is, may access a cell corresponding to a frequency point other than the target frequency point, if the second quantity of times is greater than or equal to the second quantity of times threshold. The cell may be an intra-system neighboring cell of the target cell or may be an inter-system neighboring cell of the target cell. For example, if the target cell is a 5G cell, the cell may be a 5G cell or a 4G cell.

For example, after failing to access the cell corresponding to the redirected frequency point, the electronic device may bar the target frequency point in a cell selection procedure or a cell reselection procedure when the second quantity of times is greater than or equal to the second quantity of times threshold, to select a cell corresponding to a frequency point other than the target frequency point to camp on and access.

After the electronic device accesses a cell corresponding to a frequency point other than the target frequency point, on the one hand, the problem of re-redirection caused by low cell signal quality can be prevented to some extent. On the other hand, even if redirection needs to be performed subsequently, since it is highly probable that a redirected frequency point indicated by the cell corresponding to the frequency point other than the target frequency point is different from the redirected frequency point indicated by the cell corresponding to the target frequency point, a problem that the electronic device fails to access the cell corresponding to the redirected frequency point can be prevented to some extent. In this way, repeated redirection of the electronic device within a short time can be prevented to some extent, and then the problem of service stuttering or even interruption can be prevented to some extent.

In some embodiments, in step 505, the electronic device may access a cell corresponding to a frequency point other than the target frequency point in a random access manner (including, but not limited to, a contention-based random access manner). Optionally, for a possible implementation in which the electronic device accesses the cell, refer to the manner in the foregoing embodiment in FIG. 4. Details are not described in this embodiment of this application again.

In some embodiments, in step 505, if the electronic device fails to access the cell corresponding to the redirected frequency point, the electronic device may further determine whether a cell identifier of the target cell is a problem cell identifier. The electronic device may determine the second quantity of times if the cell identifier of the target cell is not a problem cell identifier, and execute the second policy when the second quantity of times is greater than or equal to the second quantity of times threshold, to access a cell corresponding to a frequency point other than the target frequency point. However, if the cell identifier of the target cell is a problem cell identifier, the electronic device may directly execute the second policy without determining the second quantity of times, to access a cell corresponding to a frequency point other than the target frequency point.

In some embodiments, after determining the second quantity of times, the electronic device may record the target frequency point as a problem frequency point if the second quantity of times is greater than or equal to the second quantity of times threshold. The electronic device may record one or more problem frequency points. In the cell selection procedure and the cell reselection procedure, the electronic device may attempt to avoid selecting a cell corresponding to a problem frequency point, and may attempt to avoid measuring and reporting the cell corresponding to the problem frequency point during cell measurement and reporting, so as to attempt to avoid accessing the cell corresponding to the problem frequency point.

In some cases, the electronic device may still access the cell corresponding to the problem frequency point. For example, assuming that a current serving cell of the electronic device is the target cell, the target cell may be a cell corresponding to a problem frequency point previously recorded by the electronic device.

In this case, after the target cell sends the redirection message to the electronic device, in step 505, if the electronic device fails to access the cell corresponding to the redirected frequency point carried in the redirection message, the electronic device may determine the second quantity of times when determining that the frequency point of the target cell (i.e., the target frequency point) is not the recorded problem frequency point, and execute the second policy when the second quantity of times is greater than or equal to the second quantity of times threshold, to access a cell corresponding to a frequency point other than the target frequency point. However, when determining that the target frequency point is the recorded problem frequency point, the electronic device may directly execute the second policy without determining the second quantity of times, to access a cell corresponding to a frequency point other than the target frequency point.

In this embodiment of this application, after receiving the redirection message sent by the target cell, the electronic device may determine the second quantity of times if access to the cell corresponding to the redirected frequency point carried in the redirection message fails. The second quantity of times is a quantity of times of failure of access to a cell corresponding to a redirected frequency point indicated by a cell corresponding to a target frequency point within a second preset duration prior to the current moment. The target frequency point is a frequency point of the target cell. If the second quantity of times is greater than or equal to the second quantity of times threshold, it indicates that the electronic device attempts multiple times to access the cell corresponding to the redirected frequency point indicated by the cell corresponding to the target frequency point within a short time but fails. In this case, the electronic device accesses a cell corresponding to a frequency point other than the target frequency point. In this way, subsequent re-occurrence of redirection may be prevented to some extent. In addition, even if redirection occurs subsequently, a problem that the electronic device fails to access the cell corresponding to the redirected frequency point may also be prevented to some extent. In this way, repeated redirection of the electronic device within a short time can be prevented to some extent, and then the problem of service stuttering or even interruption can be prevented to some extent.

FIG. 6 is a flowchart of a cell access method according to an embodiment of this application. Referring to FIG. 6, the method includes the following steps:
Step 601: An electronic device accesses a target cell.

The operation of step 601 is similar to the operation of step 301 in the foregoing embodiment in FIG. 3, and details are not described herein again in this embodiment of this application.

Step 602: The electronic device measures that signal quality of the target cell is lower than a signal quality threshold, and sends an A2 event to the target cell.

The operation of step 602 is similar to the operation of step 302 in the foregoing embodiment in FIG. 3, and details are not described herein again in this embodiment of this application.

Step 603: The target cell sends a redirection message to the electronic device.

The operation of step 603 is similar to the operation of step 303 in the foregoing embodiment in FIG. 3, and details are not described herein again in this embodiment of this application.

Step 604: After receiving the redirection message, the electronic device accesses a cell corresponding to a redirected frequency point carried in the redirection message.

The operation of step 604 is similar to the operation of step 304 in the foregoing embodiment in FIG. 3, and details are not described herein again in this embodiment of this application.

Step 605: Determine a third quantity of times if the electronic device fails to access the cell corresponding to the redirected frequency point, and execute a third policy when the third quantity of times is greater than or equal to a third quantity of times threshold, the third policy being: accessing a cell and sending target information to the cell after the cell is accessed, the target information being used for indicating that the electronic device does not support a specified frequency band, the specified frequency band being a frequency band in which the redirected frequency point is located.

The third quantity of times is a quantity of times of failure of access to the cell corresponding to the redirected frequency point within a third preset duration prior to the current moment. The third preset duration may be preset. For example, the third preset duration may be 1 day, 2 days, 1 month, 2 months, or the like, which is not limited in this embodiment of this application.

It should be noted that the "third quantity of times" described in this embodiment of this application is determined based on the redirection message, and is used for indicating a quantity of times of failure of redirection. That is, after a cell sends a redirection message to the electronic device, if the electronic device does not successfully access a cell corresponding to a redirected frequency point carried in the redirection message, the electronic device determines that a redirection failure occurs, which may be counted towards the third quantity of times corresponding to the redirected frequency point. That is, even if the electronic device finds a plurality of cells corresponding to the redirected frequency point carried in the redirection message, access to the plurality of cells all fails, so the electronic device also determines that a redirection failure occurs.

The third quantity of times threshold may be preset. For example, the third quantity of times threshold may be 2, 3, 4, 5, 6, or the like, which is not limited in this embodiment of this application.

In some embodiments, after the electronic device determines the third quantity of times, if the third quantity of times is less than the third quantity of times threshold, the electronic device accesses a cell. In this case, the electronic device may perform a cell search, and select a proper cell from the found cells to camp on and access.

If the third quantity of times is greater than or equal to the third quantity of times threshold, it indicates that the electronic device has previously attempted multiple times to access the cell corresponding to the redirected frequency point but fails. In this case, it is reasonable to suspect that the frequency band (that is, the specified frequency band) in which the redirected frequency point is located has a problem. Therefore, in this embodiment of this application, after failing to access the cell corresponding to the redirected frequency point, the electronic device may first access a cell when the third quantity of times is greater than or equal to the third quantity of times threshold, and then send target information to the cell after accessing the cell. Since the target information indicates that the electronic device does not support the specified frequency band, the cell may learn that the electronic device does not support the specified frequency band after receiving the target information. Then, when redirection needs to be performed subsequently, it is highly probable that the redirected frequency point indicated by the cell may not be a frequency point in the specified frequency band. Therefore, the problem that the electronic device fails to access the cell corresponding to the redirected frequency point can be prevented to some extent. In this way, repeated redirection of the electronic device within a short time can be prevented to some extent, and then the problem of service stuttering or even interruption can be prevented to some extent.

It should be noted that, in this embodiment of this application, although the electronic device sends the target information to the cell to indicate that the electronic device does not support the specified frequency band, this is to prevent subsequent redirection of the electronic device to the specified frequency band by the cell, which does not mean that the electronic device actually does not support the specified frequency band. That is, even if the electronic device supports the specified frequency band, the electronic device also sends the target information to the cell in the foregoing situation, to make the cell consider that the electronic device does not support the specified frequency band.

For example, after failing to access the cell corresponding to the redirected frequency point, the electronic device may perform a cell search when the third quantity of times is greater than or equal to the third quantity of times threshold, then select a proper cell from the found cells to camp on and access, and send target information to the cell after accessing the cell.

It should be noted that the cell that the electronic device accesses may be the target cell or may not be the target cell, which is not limited in this embodiment of this application.

In some embodiments, in step 605, the electronic device may access the cell in a random access manner (including, but not limited to, a contention-based random access manner). Optionally, for a possible implementation in which the electronic device accesses the cell, refer to the manner in the foregoing embodiment in FIG. 4. Details are not described in this embodiment of this application again.

In some embodiments, the target information may be UE capability information (UE capability information). In this case, the operation of sending, by the electronic device, the target information to the cell after accessing the cell may be: sending, by the electronic device after accessing the cell, a mobility registration updating (mobility registration updating, MRU) message to the cell, to indicate that the UE capability information needs to be updated; sending, by the cell after receiving the MRU message, a UE capability enquiry (UE capability enquiry) message to the electronic device; and sending, by the electronic device after receiving the UE capability enquiry message, the UE capability information to the cell, the UE capability information being used for indicating that the electronic device does not support a specified frequency band.

In this embodiment of this application, the electronic device may actively trigger an MRU procedure after accessing the cell, so that the cell queries for UE capability information. In this way, the electronic device may report the UE capability information to the cell, to indicate that the electronic device does not support the specified frequency band.

Certainly, after accessing the cell, the electronic device may alternatively send the target information to the cell in another manner, which is not limited in this embodiment of this application.

In some embodiments, in step 605, if the electronic device fails to access the cell corresponding to the redirected frequency point, the electronic device may further determine whether a cell identifier of the target cell is a problem cell identifier and determine whether a frequency point of the target cell is a problem frequency point. The electronic device may determine the third quantity of times if the cell identifier of the target cell is not a problem cell identifier and the frequency point of the target cell is not a problem frequency point, and then execute the third policy when the third quantity of times is greater than or equal to the third quantity of times threshold. However, if the cell identifier of the target cell is a problem cell identifier and/or the frequency point of the target cell is a problem frequency point, the electronic device may directly execute the third policy without determining the third quantity of times.

In this embodiment of this application, after receiving the redirection message sent by the target cell, the electronic device may determine the third quantity of times if failing to access the cell corresponding to the redirected frequency point carried in the redirection message. The third quantity of times is a quantity of times of failure of access to the cell corresponding to the redirected frequency point within a third preset duration prior to the current moment. If the third quantity of times is greater than or equal to the third quantity of times threshold, it indicates that the electronic device has previously attempted multiple times to access the cell corresponding to the redirected frequency point but fails. In this case, the electronic device first accesses a cell, and then sends the target information to the cell after accessing the cell, to indicate that the electronic device does not support the specified frequency band in which the redirected frequency point is located. In this way, even if redirection occurs subsequently, a problem that the electronic device fails to access the cell corresponding to the redirected frequency point may also be prevented to some extent. In this way, repeated redirection of the electronic device within a short time can be prevented to some extent, and then the problem of service stuttering or even interruption can be prevented to some extent.

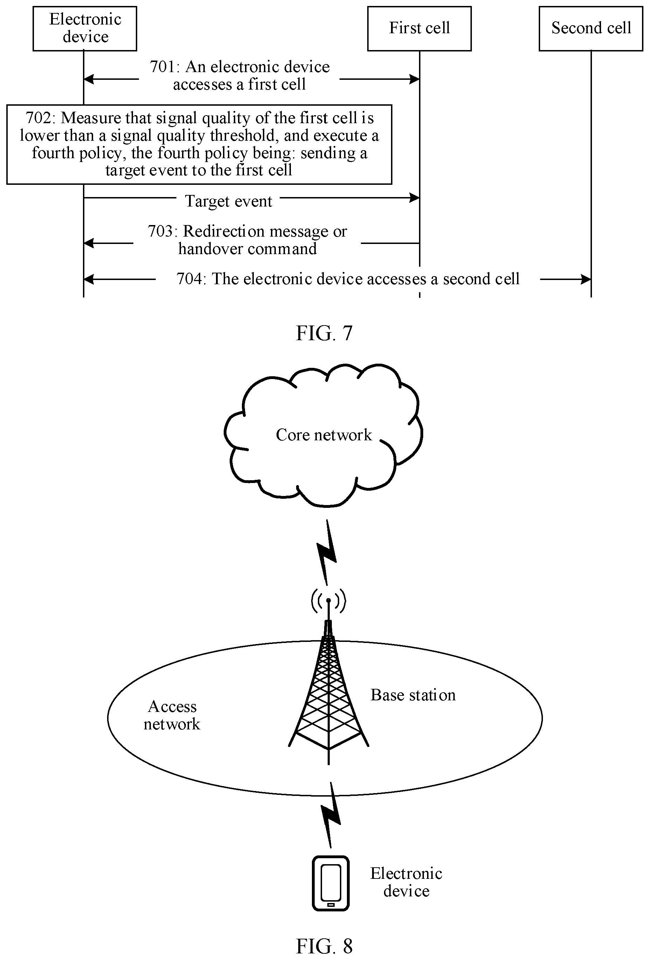

FIG. 7 is a flowchart of a cell access method according to an embodiment of this application. Referring to FIG. 7, the method includes the following steps:
Step 701: An electronic device accesses a first cell.

The operation of step 701 is similar to the operation of step 301 in the foregoing embodiment in FIG. 3, and details are not described herein again in this embodiment of this application.

Step 702: The electronic device measures that signal quality of the first cell is lower than a signal quality threshold, and executes a fourth policy, the fourth policy being: sending a target event to the first cell, the target event being used for indicating that signal quality of an inter-system neighboring cell is higher than the signal quality threshold.

For example, the target event may be a B event, which may be, for example, a B1 event or a B2 event. The B1 event is used for indicating that the signal quality of the inter-system neighboring cell is higher than a threshold. The B2 event is used for indicating that signal quality of a serving cell is lower than a threshold 1, and the signal quality of the inter-system neighboring cell is higher than a threshold 2. The threshold 1 and the threshold 2 may be the same or may be different. Optionally, the thresholds in the B1 event and the B2 event may be configured by a network side (including an access network and a core network).

The signal quality threshold may be preset. For example, the signal quality threshold may be a threshold of an A2 event.

It should be noted that, the electronic device should report the A2 event to the first cell when measuring that the signal quality of the first cell is lower than the signal quality threshold. However, in the related technology, after receiving the A2 event, the first cell may possibly instruct the electronic device to redirect to an intra-system frequency point of the first cell. Generally, a failure probability of accessing the intra-system frequency point of the first cell by the electronic device is higher than a failure probability of accessing an inter-system frequency point of the first cell. Therefore, the electronic device does not report the A2 event when measuring that the signal quality of the first cell is lower than the signal quality threshold, but reports the target event, to indicate that signal quality of the inter-system neighboring cell is higher than the signal quality threshold. After receiving the target event, the first cell learns that the signal quality of the inter-system neighboring cell is higher, so it is highly likely to subsequently instruct the electronic device to redirect or hand over to the inter-system neighboring cell.

It may be understood that, in this embodiment of this application, the target event is triggered in the following two situations:
In a first situation, the target event is normally triggered according to the signal quality of the inter-system neighboring cell and a threshold thereof. That is, the electronic device normally triggers the B1 event when measuring that the signal quality of the inter-system neighboring cell is higher than the threshold, and reports the B1 event to the serving cell. Alternatively, the electronic device normally triggers the B2 event when measuring that the signal quality of the serving cell is lower than the threshold 1 and the signal quality of the inter-system neighboring cell is higher than the threshold 2, and reports the B2 event to the serving cell.

In a second situation, the target event is triggered in the manner in step 702. That is, if measuring that the signal quality of the serving cell is lower than the signal quality threshold, the electronic device directly triggers the B1 event or the B2 event without considering a magnitude relationship between signal quality of a current inter-system neighboring cell and a threshold thereof, and reports the B1 event or the B2 event to the serving cell.

In some embodiments, in step 702, when measuring that the signal quality of the first cell is lower than the signal quality threshold, the electronic device may further determine whether a cell identifier of the first cell is a problem cell identifier and determine whether a frequency point of the first cell is a problem frequency point. If the cell identifier of the first cell is not a problem cell identifier and the frequency point of the first cell is not a problem frequency point, the electronic device may send the A2 event to the first cell. If the cell identifier of the first cell is not a problem cell identifier and/or the frequency point of the first cell is not a problem frequency point, the electronic device may execute the fourth policy, to send the target event to the first cell.

Step 703: The first cell sends a redirection message or handover command to the electronic device.

The redirection message is used for indicating redirection to the cell corresponding to the redirected frequency point. The redirected frequency point carried in the redirection message is a frequency of a second cell, and the second cell is an inter-system neighboring cell of the first cell.

For example, the redirection message may be an RRC connection release message carrying a redirected frequency point information element. The redirected frequency point included in the redirected frequency point information element is an inter-system frequency point of the first cell, that is, a frequency point of the second cell. For example, if the first cell is a 5G cell, the redirected frequency point may be a 4G frequency point.

It should be noted that redirection is generally categorized into blind redirection and measurement redirection.

In some embodiments, after receiving the target event sent by the electronic device, the first cell may directly specify an inter-system frequency point as the redirected frequency point, and then directly send a redirection message carrying the redirected frequency point to the electronic device, to instruct the electronic device to hand over to a cell corresponding to the redirected frequency point. The redirection process is a blind redirection process.

In some other embodiments, after receiving the target event sent by the electronic device, the first cell first sends a measurement configuration message to the electronic device, to instruct the electronic device to measure and report cell signal quality corresponding to a related inter-system frequency point. After receiving cell signal quality reported by the electronic device, the first cell determines an inter-system frequency point as the redirected frequency point accordingly, and then sends a redirection message carrying the redirected frequency point to the electronic device, to instruct the electronic device to hand over to a cell corresponding to the redirected frequency point. The redirection process is a measurement redirection process.

The handover command is used for indicating handover to a second cell. For example, if the first cell is a 5G cell, the handover command may indicate handover to a 4G cell.

For example, the handover command may be an RRC connection reconfiguration message carrying a mobility control (mobilityControlInfo) information element.

Optionally, the handover command may include a radio parameter that needs to be used when the second cell is handed over to, which may include, for example, a PCI of the second cell to be handed over to, radio bearer (radio bearer, RB) configuration information, and the like.

The RB configuration information is RB-related configuration information. For example, the RB configuration information may include configuration information related to a signaling radio bearer (sgnalling radio bearer, SRB) 1, an SRB2, and a data radio bearer (data radio bearer, DRB).

An SRB is a channel for actual transmission of a signaling message. The SRB1 is used for bearing an RRC message, and may further bear some NAS messages. The SRB2 is used for bearing a NAS message. The DRB is a channel for actual transmission of user data.

Step 704: The electronic device accesses, if receiving the redirection message, a second cell corresponding to a redirected frequency point carried in the redirection message; and the electronic device accesses, if receiving the handover command, a second cell indicated by the handover command.

Optionally, after receiving the redirection message, the electronic device releases an RRC connection with the first cell. After the RRC connection is released, the electronic device is in an RRC idle state. Then, the electronic device searches for a second cell corresponding to the redirected frequency point, and selects a second cell from the found second cells to camp on and access.

Optionally, after receiving the handover command, the electronic device may camp on and access a second cell according to the radio parameter included in the handover command.

In this embodiment of this application, the electronic device may report the target event to the first cell when the signal quality of the first cell is lower, to make the first cell instruct the electronic device to redirect or hand over to the second cell. Since the second cell is an inter-system neighboring cell of the first cell and a mobile communication technology standard supported by the second cell is lower than a mobile communication technology standard supported by the first cell, the electronic device actually falls back from the first cell to the second cell during redirection or handover. In this case, compared with accessing an intra-system neighboring cell of the first cell, the electronic device achieves a higher success rate when accessing the second cell. In this way, repeated redirection of the electronic device within a short time can be prevented to some extent, and then the problem of service stuttering or even interruption can be prevented to some extent.

In some embodiments, when the electronic device accesses a second cell corresponding to the redirected frequency point carried in the redirection message, the electronic device may access the second cell in a random access manner (including, but not limited to, a contention-based random access manner). Optionally, for a possible implementation in which the electronic device accesses the second cell, refer to the manner in the foregoing embodiment in FIG. 4. Details are not described in this embodiment of this application again.

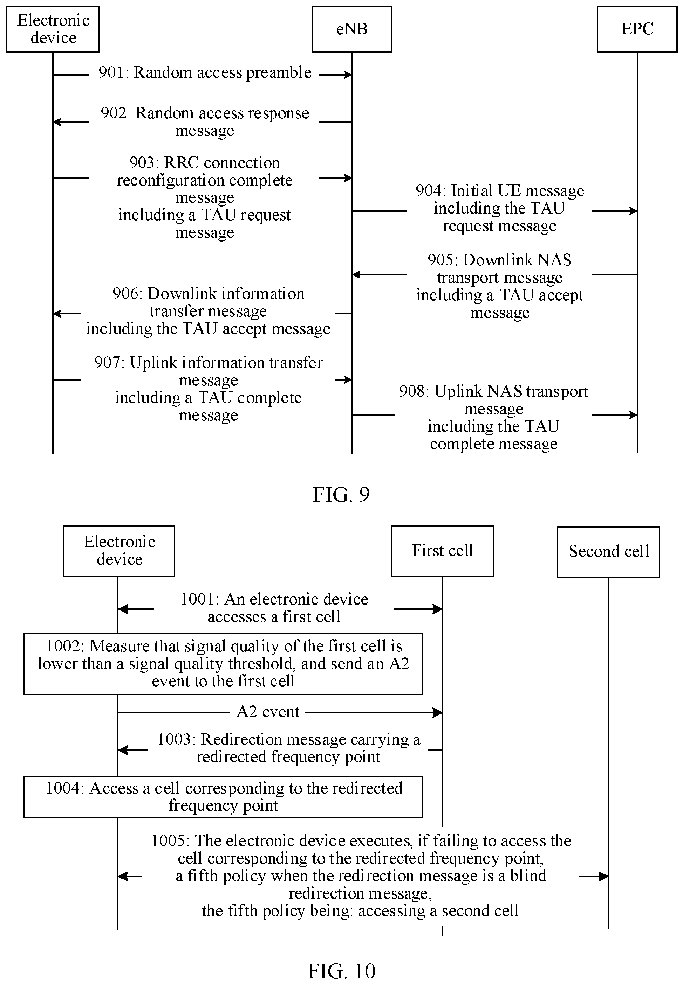

In some embodiments, when accessing a second cell indicated by the handover command, the electronic device may access the second cell according to the radio parameter included in the handover command in a random access manner (including, but not limited to, a contention-based random access manner). Next, a possible implementation in which the electronic device accesses the second cell is exemplarily described below with reference to FIG. 8 and FIG. 9.

As an example, as shown in FIG. 8, a communications system in this embodiment of this application may include an electronic device, an access network, and a core network. The electronic device communicates with the access network, and the access network communicates with the core network.

The access network is responsible for aggregating most end users (end user) level by level to the core network by using a wired or wireless connection and communication technology, to implement a connection with the network. The access network is an edge part of the entire network and a part closest to a user, which is generally referred to as "last mile".

For example, an access network of a 5G network includes a 5G cell, and a base station (that is, a gNB) of the 5G cell may be referred to as an access network device in the 5G network. For example, an access network of a 4G network includes a 4G cell, and a base station (that is, an eNB) of the 4G cell may be referred to as an access network device in the 4G network.

The core network has main functions of providing a user connection, managing a user, and bearing a service, and serves as a bearer network to provide an interface to an external network. Setup of the user connection includes functions such as mobility management (mobile management, MM), call management (call management, CM), switching/routing, and recording notification (completing a connection relationship to an intelligent network peripheral device with reference to an intelligent network service).

For example, the core network of the 5G network is a 5G Core (5GC for short). The 5GC may replace a dedicated communication device of the 4G network with a general-purpose network function virtualization device. For example, the core network of the 4G network is an evolved packet core (evolved packet core, EPC). The EPC has conventional mobile network capabilities such as user subscription data storage, mobility management, and data exchange, and can provide ultra-high-speed Internet experience for the user.

In this embodiment of this application, the first cell belongs to an access network of a first network, and a base station of the first cell is an access network device in the first network. For example, it is assumed that the first cell is a 5G cell. When the electronic device camps on the 5G cell, the electronic device communicates with the gNB of the 5G cell, and the gNB communicates with the 5GC.

The second cell belongs to an access network of a second network, and a base station of the second cell is an access network device in the second network. For example, it is assumed that the second cell is a 4G cell. When the electronic device camps on the 4G cell, the electronic device communicates with the eNB of the 4G cell, and the eNB communicates with the EPC.

In some embodiments, a process in which the electronic device accesses a second cell indicated by the handover command involves interaction between the electronic device, the access network device of the second network (that is, the base station of the second cell), and the core network of the second network.

Assuming that the electronic device accesses the second cell in a non-contention-based random access manner, the handover command sent by the first cell to the electronic device may further include a non-contention random access preamble (non-contention random access preamble) assigned to the electronic device. In this case, the handover command may also be referred to as an MSG0 message.

In this case, assuming that the second cell is a 4G cell, a process in which the electronic device accesses a 4G cell indicated by the handover command involves interaction between the electronic device and the eNB and the EPC of the 4G cell, which is specifically described in the following embodiment in FIG. 9.

FIG. 9 is a schematic diagram of a cell access process according to an embodiment of this application. Referring to FIG. 9, the cell access process may include the following step 901 to step 908.

Step 901: An electronic device sends a random access preamble to an eNB of the 4G cell.

For example, the electronic device may camp on the 4G cell according to a cell identifier of the 4G cell included in the handover command, and send the random access preamble assigned in the handover command to the eNB of the 4G cell.

For example, the electronic device may carry the random access preamble in an MSG1 message and send the MSG1 message to the eNB.

Step 902: The eNB sends a random access response message to the electronic device after receiving the random access preamble.

For example, the random access response message may also be referred to as an MSG2 message.

It should be noted that, after the cell on which the electronic device camps is changed, the electronic device may find that a tracking area (tracking area, TA) or a TA list is changed. 1 TA list includes a plurality of TAs.

After receiving the random access response message sent by the eNB, the electronic device actually has accessed the 4G cell. However, since the cell on which the electronic device camps is changed, after accessing the 4G cell, the electronic device further needs to perform tracking area update (tracking area update, TAU), to notify a current TA thereof on a network side (that is, the eNB and the EPC). Therefore, after receiving the random access response message, the electronic device may further perform the following step 903 to step 908 to perform TAU.

Step 903: After receiving the random access response message, the electronic device sends an RRC connection reconfiguration complete (connection reconfiguration complete) message to the eNB, the RRC connection reconfiguration complete message including a TAU request message of a NAS layer.

In some embodiments, after receiving the handover command, the electronic device may first configure related RBs according to the RB configuration information in the handover command. For example, an SRB1, an SRB2, and a DRB may be configured. In this case, in step 903, the electronic device may send the RRC connection reconfiguration complete message to the eNB by using the SRB1.

For example, the TAU request message may include TAI of the current TA of the electronic device.

Step 904: The eNB sends an initial UE message (initial UE message) to an EPC after receiving the RRC connection reconfiguration complete message, the initial UE message including the TAU request message.

Step 905: The EPC sends a downlink NAS transport (downlink NAS transport) message to the eNB after receiving the initial UE message, the downlink NAS transport message including a TAU accept message of the NAS layer.

Optionally, after the EPC receives the initial UE message, if determining that the electronic device performs access for the first time, the EPC may perform authentication/security (authentication/security) on the electronic device, to create some security-related parameters for the electronic device.

Optionally, after receiving the initial UE message, the EPC may update the TA or the TA list of the electronic device, and after the update, send the downlink NAS transport message including the TAU accept message to the eNB.

Step 906: The eNB sends a downlink information transfer (DL information transfer) message to the electronic device after receiving the downlink NAS transport message, the downlink information transfer message including the TAU accept message.

Step 907: The electronic device sends an uplink information transfer (UL information transfer) message to the eNB after receiving the downlink information transfer message, the uplink information transfer message including a TAU complete message of the NAS layer.

Optionally, the electronic device may send the uplink information transfer message to the eNB by using the SRB2.

Step 908: The eNB sends an uplink NAS transport (uplink NAS transport) message to the EPC after receiving the uplink information transfer message, the uplink NAS transport message including the TAU complete message.

After the EPC receives the TAU complete message, a TAU procedure is completed.

So far, the electronic device has completed a cell access procedure and a related TAU procedure. After accessing the 4G cell, the electronic device may perform service data transmission by using the 4G cell.

It should be noted that, in this embodiment of this application, the process in which the electronic device accesses a second cell indicated by the handover command is exemplarily described merely by using the foregoing embodiment in FIG. 9 as an example, and the foregoing embodiment in FIG. 9 does not constitute a limitation on this embodiment of this application. The electronic device may alternatively access a second cell indicated by the handover command in another manner different from that in the foregoing embodiment in FIG. 9, which is not limited in this embodiment of this application.

In this embodiment of this application, when accessing the first cell, the electronic device sends a target event to the first cell if measuring that signal quality of the first cell is lower than the signal quality threshold. The target event is used for indicating that signal quality of an inter-system neighboring cell is higher than the signal quality threshold. Then, the electronic device receives a redirection message or a handover command sent by the first cell. A redirected frequency point carried in the redirection message is a frequency point of the second cell, and the handover command indicates handover to a second cell. Then, the electronic device may access a second cell corresponding to the redirected frequency point or access a second cell indicated by the handover command. Since the electronic device achieves a higher success rate when accessing the second cell, repeated redirection of the electronic device within a short time can be prevented to some extent, and then the problem of service stuttering or even interruption can be prevented to some extent.

FIG. 10 is a flowchart of a cell access method according to an embodiment of this application. Referring to FIG. 10, the method includes the following steps:
Step 1001: An electronic device accesses a first cell.

The operation of step 1001 is similar to the operation of step 301 in the foregoing embodiment in FIG. 3, and details are not described herein again in this embodiment of this application.

Step 1002: The electronic device measures that signal quality of the first cell is lower than a signal quality threshold, and sends an A2 event to the first cell.

The operation of step 1002 is similar to the operation of step 302 in the foregoing embodiment in FIG. 3, and details are not described herein again in this embodiment of this application.

Step 1003: The first cell sends a redirection message to the electronic device.

The operation of step 1003 is similar to the operation of step 303 in the foregoing embodiment in FIG. 3, and details are not described herein again in this embodiment of this application.

Step 1004: After receiving the redirection message, the electronic device accesses a cell corresponding to a redirected frequency point carried in the redirection message.

The operation of step 1004 is similar to the operation of step 304 in the foregoing embodiment in FIG. 3, and details are not described herein again in this embodiment of this application.

In some embodiments, in step 1004, after receiving the redirection message, the electronic device may directly access the cell corresponding to the redirected frequency point carried in the redirection message.

In some other embodiments, in step 1004, after receiving the redirection message, the electronic device may further determine whether a cell identifier of the first cell is a problem cell identifier and determine whether a frequency point of the first cell is a problem frequency point. If the cell identifier of the first cell is not a problem cell identifier and the frequency point of the first cell is not a problem frequency point, the electronic device may access the cell corresponding to the redirected frequency point carried in the redirection message. However, if the cell identifier of the first cell is a problem cell identifier and/or the frequency point of the first cell is a problem frequency point, the electronic device may determine whether the redirection message is a measurement redirection message or a blind redirection message. If the redirection message is a measurement redirection message, the electronic device may access the cell corresponding to the redirected frequency point carried in the redirection message. If the redirection message is a blind redirection message, the electronic device does not access the cell corresponding to the redirected frequency point carried in the redirection message, but executes a fifth policy. The fifth policy is: accessing a second cell. The second cell is an inter-system neighboring cell of the first cell.

As an example, after sending the A2 event to the first cell, if the electronic device receives a measurement configuration message sent by the first cell, measures related cell signal quality and reports the related cell signal quality to the first cell, and then receives the redirection message sent by the first cell, the redirection message is a measurement redirection message. However, after sending the A2 event to the first cell, if the electronic device receives the redirection message sent by the first cell without measuring and reporting related cell signal quality, the redirection message is a blind redirection message.

Since the redirected frequency point carried in the measurement redirection message is determined by the first cell according to related cell signal quality reported by the electronic device, the electronic device achieves a higher success rate when accessing the cell corresponding to the redirected frequency point carried in the measurement redirection message. Therefore, when the redirection message is a measurement redirection message, the electronic device may access the cell corresponding to the redirected frequency point carried in the redirection message.

Since the redirected frequency point carried in the blind redirection message is directly specified by the first cell, when the cell identifier of the first cell is a problem cell identifier and/or the frequency point of the first cell is a problem frequency point, the electronic device generally achieves a lower success rate when accessing the cell corresponding to the redirected frequency point carried in the blind redirection message. Therefore, in this embodiment of this application, when the cell identifier of the first cell is a problem cell identifier and/or the frequency point of the first cell is a problem frequency point and the redirection message is a blind redirection message, the electronic device accesses the second cell instead of accessing the cell corresponding to the redirected frequency point carried in the redirection message. The second cell is an inter-system neighboring cell of the first cell and a mobile communication technology standard supported by the second cell is lower than a mobile communication technology standard supported by the first cell. In this case, the electronic device actually falls back from the first cell to the second cell during redirection. In this case, compared with accessing the cell corresponding to the redirected frequency point directly specified by the first cell in the blind redirection message, the electronic device achieves a higher success rate when accessing the second cell. In this way, repeated redirection of the electronic device within a short time can be prevented to some extent, and then the problem of service stuttering or even interruption can be prevented to some extent.

In some embodiments, the electronic device may access the second cell in a random access manner (including, but not limited to, a contention-based random access manner). Optionally, for a possible implementation in which the electronic device accesses the second cell, refer to the manner in the foregoing embodiment in FIG. 4. Details are not described in this embodiment of this application again.

Step 1005: The electronic device executes, if failing to access the cell corresponding to the redirected frequency point, a fifth policy when the redirection message is a blind redirection message, the fifth policy being: accessing a second cell.

After the electronic device fails to access the cell corresponding to the redirected frequency point, if the redirection message is a measurement redirection message, the electronic device accesses a cell. In this case, the electronic device may perform a cell search, and select a proper cell from the found cells to camp on and access. In this case, the accessed cell may be the first cell or may be the second cell.

After the electronic device fails to access the cell corresponding to the redirected frequency point, if the redirection message is a blind redirection message, the electronic device accesses a second cell.

Since the redirected frequency point carried in the blind redirection message is directly specified by the first cell, when the electronic device fails to access the cell corresponding to the redirected frequency point carried in the blind redirection message, it is reasonable to suspect that intra-system neighboring cells of the first cell are all likely to have the problem. Therefore, in this embodiment of this application, when failing to access the cell corresponding to the redirected frequency point carried in the blind redirection message, the electronic device directly accesses an inter-system neighboring cell of the first cell, that is, the second cell.

After the electronic device accesses the second cell, on the one hand, the problem of re-redirection caused by low cell signal quality can be prevented to some extent. On the other hand, even if redirection needs to be performed subsequently, since it is highly probable that a redirected frequency point indicated by the second cell is different from a redirected frequency point indicated by the first cell, a problem that the electronic device fails to access the cell corresponding to the redirected frequency point can be prevented to some extent. In this way, repeated redirection of the electronic device within a short time can be prevented to some extent, and then the problem of service stuttering or even interruption can be prevented to some extent.

In some embodiments, the electronic device may access the second cell in a random access manner (including, but not limited to, a contention-based random access manner). Optionally, for a possible implementation in which the electronic device accesses the second cell, refer to the manner in the foregoing embodiment in FIG. 4. Details are not described in this embodiment of this application again.

In this embodiment of this application, after receiving the redirection message sent by the first cell, the electronic device accesses a cell corresponding to a redirected frequency point carried in the redirection message. If the electronic device fails to access the cell corresponding to the redirected frequency point, the electronic device accesses a second cell when the redirection message is a blind redirection message. In this way, subsequent re-occurrence of redirection may be prevented to some extent. In addition, even if redirection occurs subsequently, a problem that the electronic device fails to access the cell corresponding to the redirected frequency point may also be prevented to some extent. In this way, repeated redirection of the electronic device within a short time can be prevented to some extent, and then the problem of service stuttering or even interruption can be prevented to some extent.

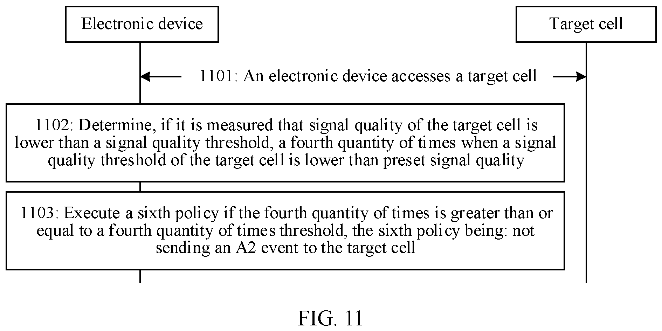

FIG. 11 is a flowchart of a cell access method according to an embodiment of this application. Referring to FIG. 11, the method includes the following steps:
Step 1101: An electronic device accesses a target cell.

The operation of step 1101 is similar to the operation of step 301 in the foregoing embodiment in FIG. 3, and details are not described herein again in this embodiment of this application.

Step 1102: The electronic device determines, if measuring that signal quality of the target cell is lower than a signal quality threshold, a fourth quantity of times when a signal quality threshold of the target cell is lower than preset signal quality.

After measuring that signal quality of the target cell is lower than the signal quality threshold, the electronic device may send an A2 event to the target cell when the signal quality threshold of the target cell is no lower than the preset signal quality. However, when the signal quality threshold of the target cell is lower than the preset signal quality, the fourth quantity of times needs to be first determined, and then whether to send the A2 event to the target cell is determined accordingly.

The fourth quantity of times is a quantity of times of failure of access to a cell corresponding to a redirected frequency point carried in a redirection message within a fourth preset duration prior to a current moment. The fourth preset duration may be preset. For example, the fourth preset duration may be 1 day, 2 days, 1 month, or the like, which is not limited in this embodiment of this application.

It should be noted that the "fourth quantity of times" described in this embodiment of this application is determined based on the redirection message, and is used for indicating a quantity of times of failure of redirection. That is, after any cell sends a redirection message to the electronic device, if the electronic device does not successfully access a cell corresponding to a redirected frequency point carried in the redirection message, the electronic device determines that a redirection failure occurs, which may be counted towards the fourth quantity of times. That is, even if the electronic device finds a plurality of cells corresponding to the redirected frequency point carried in the redirection message, access to the plurality of cells all fails, so the electronic device also determines that a redirection failure occurs.

For example, the signal quality threshold may be a threshold of an A2 event. A threshold of the A2 event is generally configured by a network side, and the network side may configure one or more thresholds for the A2 event. When measuring that the signal quality of the target cell is lower than any threshold, the electronic device may trigger the A2 event.

When measuring that the signal quality of the target cell is lower than a corresponding threshold, the electronic device may report, to the target cell, the A2 event carrying the signal quality of the target cell. After receiving the A2 event, the target cell may perform measurement redirection or blind redirection.

Generally, when the signal quality of the target cell carried in the A2 event is higher, the target cell may perform measurement redirection. When the signal quality of the target cell carried in the A2 event is lower, the target cell may perform blind redirection.

The preset signal quality may be preset. The preset signal quality is a signal quality that may probably trigger the target cell to perform blind redirection. That is, when the signal quality of the target cell carried in the A2 event is lower than the preset signal quality, the target cell may probably perform blind redirection after receiving the A2 event.

For example, the network side configures three thresholds for the A2 event, which are sequentially a threshold 1, a threshold 2, and a threshold 3 in descending order.

When measuring that the signal quality of the target cell is lower than the threshold 1 and higher than or equal to the threshold 2, the electronic device may send, to the target cell, the A2 event carrying the signal quality of the target cell. After receiving the A2 event, the target cell may instruct the electronic device to perform inter-frequency measurement. Then, the target cell may instruct, according to cell signal quality measured by the electronic device, the electronic device to redirect to an intra-system neighboring cell of the target cell. The process is measurement redirection.

When measuring that the signal quality of the target cell is lower than the threshold 2 and higher than or equal to the threshold 3, the electronic device may send, to the target cell, the A2 event carrying the signal quality of the target cell. After receiving the A2 event, the target cell may instruct the electronic device to perform inter-system measurement. Then, the target cell may instruct, according to the cell signal quality measured by the electronic device, the electronic device to redirect to an inter-system neighboring cell of the target cell. The process is measurement redirection.

If measuring that the signal quality of the target cell is lower than the threshold 3, the electronic device may send, to the target cell, the A2 event carrying the signal quality of the target cell. After receiving the A2 event, the target cell may directly use a specified frequency point as a redirected frequency point, and then instruct the electronic device to redirect to a cell corresponding to the specified frequency point. The process is blind redirection.

In this case, the preset signal quality may be lower than the threshold 2 and higher than or equal to the threshold 3.

After the electronic device determines the fourth quantity of times, if the fourth quantity of times is less than a fourth quantity of times threshold, the electronic device may send, to the target cell, the A2 event carrying the signal quality of the target cell. If the fourth quantity of times is greater than or equal to the fourth quantity of times threshold, the electronic device performs the following step 1103.

The fourth quantity of times threshold may be preset. For example, the fourth quantity of times threshold may be 4, 5, 6, or the like, which is not limited in this embodiment of this application.

Step 1103: If the fourth quantity of times is greater than or equal to a fourth quantity of times threshold, the electronic device executes a sixth policy, the sixth policy being: not sending an A2 event to the target cell.

When the signal quality of the target cell is lower than the preset signal quality, if the electronic device reports the A2 event, the target cell may possibly be triggered to perform blind redirection. If the fourth quantity of times is greater than or equal to the fourth quantity of times threshold, it indicates that the electronic device attempts multiple times to access the cell corresponding to the redirected frequency point carried in the redirection message but fails. In this case, if the electronic device reports the A2 event to trigger blind redirection, the electronic device may still fail to access the cell corresponding to the redirected frequency point carried in the redirection message. In this way, service stuttering or even interruption may be obviously caused. Therefore, in this embodiment of this application, the electronic device does not report the A2 event in this case, to prevent triggering of blind redirection. In this way, the problem of service stuttering or even interruption can be prevented to some extent. It should be noted that, although current signal quality of the target cell is poor, the electronic device can continue a service by maintaining access to the target cell. Compared with the problem of obvious service stuttering or even interruption caused by impossible access of the electronic device to the cell for a period of time due to failure of access after blind redirection, the electronic device maintaining access to the target cell is obviously more conducive to the service.

In some embodiments, in step 1102, when measuring that signal quality of the target cell is lower than the signal quality threshold and lower than the preset signal quality, the electronic device may further determine whether a cell identifier of the target cell is a problem cell identifier and determine whether a frequency point of the target cell is a problem frequency point. If the cell identifier of the target cell is not a problem cell identifier and the frequency point of the target cell is not a problem frequency point, the electronic device may determine the fourth quantity of times, and execute the sixth policy when the fourth quantity of times is greater than or equal to the fourth quantity of times threshold, that is, does not send the A2 event to the target cell. However, if the cell identifier of the target cell is a problem cell identifier and/or the frequency point of the target cell is a problem frequency point, the electronic device may directly execute the sixth policy without determining the fourth quantity of times, that is, does not send the A2 event to the target cell.

In this embodiment of this application, after accessing the target cell, the electronic device determines, if measuring that the signal quality of the target cell is lower than the signal quality threshold, a fourth quantity of times when the signal quality of the target cell is lower than the preset signal quality. The fourth quantity of times is a quantity of times of failure of access of the electronic device to the cell corresponding to the redirected frequency point carried in the redirection message within the fourth preset duration prior to the current moment. When the fourth quantity of times is greater than or equal to the fourth quantity of times threshold, the electronic device executes a sixth policy, that is, does not send the A2 event to the target cell, to avoid triggering blind redirection. In this way, the problem of service stuttering or even interruption can be prevented to some extent.

The first policy, the second policy, the third policy, the fourth policy, the fifth policy, and the sixth policy provided in the embodiment in FIG. 3 to the embodiment in FIG. 11 above are all intended to resolve the problem of service stuttering or even interruption. In some embodiments, the six policies may be flexibly combined, to prevent the problem of service stuttering or even interruption to a greater extent.

Generally, the first policy, the second policy, the third policy, the fourth policy, the fifth policy, and the sixth policy make sequentially increasing modifications to an original procedure, with correspondingly higher probabilities of successfully resolving the problem.

It may be understood that the six policies may be combined in multiple manners. For example, the policies may be combined in pairs, for example, the first policy + the second policy, the first policy + the third policy, the first policy + the fourth policy, the first policy + the fifth policy, the first policy + the sixth policy, the second policy + the third policy, the second policy + the fourth policy, the second policy + the fifth policy, the second policy + the sixth policy, the third policy + the fourth policy, the third policy + the fifth policy, the third policy + the sixth policy, the fourth policy + the fifth policy, the fourth policy + the sixth policy, and the fifth policy + the sixth policy. The policies may alternatively be combined in triplets, for example, the first policy + the second policy + the third policy, the first policy + the second policy + the fourth policy, the first policy + the second policy + the fifth policy, the first policy + the second policy + the sixth policy, the first policy + the third policy + the fourth policy, the first policy + the third policy + the fifth policy, the first policy + the third policy + the sixth policy, the first policy + the fourth policy + the fifth policy, the first policy + the fourth policy + the sixth policy, the first policy + the fifth policy + the sixth policy, the second policy + the third policy + the fourth policy, the second policy + the third policy + the fifth policy, the second policy + the third policy + the sixth policy, the second policy + the fourth policy + the fifth policy, the second policy + the fourth policy + the sixth policy, the second policy + the fifth policy + the sixth policy, the third policy + the fourth policy + the fifth policy, the third policy + the fourth policy + the sixth policy, and the fourth policy + the fifth policy + the sixth policy. The policies may alternatively be combined in quadruplets, for example, the first policy + the second policy + the third policy + the fourth policy, the first policy + the second policy + the third policy + the fifth policy, the first policy + the second policy + the third policy + the sixth policy, the first policy + the second policy + the fourth policy + the fifth policy, the first policy + the second policy + the fourth policy + the sixth policy, the first policy + the second policy + the fifth policy + the sixth policy, the first policy + the third policy + the fourth policy + the fifth policy, the first policy + the third policy + the fourth policy + the sixth policy, the first policy + the third policy + the fifth policy + the sixth policy, the first policy + the fourth policy + the fifth policy + the sixth policy, the second policy + the third policy + the fourth policy + the fifth policy, the second policy + the third policy + the fourth policy + the sixth policy, the second policy + the third policy + the fifth policy + the sixth policy, the second policy + the fourth policy + the fifth policy + the sixth policy, and the third policy + the fourth policy + the fifth policy + the sixth policy. The policies may alternatively be combined in quintuplets, for example, the first policy + the second policy + the third policy + the fourth policy + the fifth policy, the first policy + the second policy + the third policy + the fourth policy + the sixth policy, the first policy + the second policy + the third policy + the fifth policy + the sixth policy, the first policy + the second policy + the fourth policy + the fifth policy + the sixth policy, the first policy + the third policy + the fourth policy + the fifth policy + the sixth policy, and the second policy + the third policy + the fourth policy + the fifth policy + the sixth policy. The six policies may alternatively be combined together: the first policy + the second policy + the third policy + the fourth policy + the fifth policy + the sixth policy.

In some embodiments, during execution of each of the foregoing combination manners, the preceding policy is first executed in an attempt to resolve the problem, and the subsequent policy is executed when the problem still occurs after the preceding policy is executed. This is described in detail below.

Next, a possible combination manner of the embodiment in FIG. 3 and the embodiment in FIG. 5 above is described in detail.

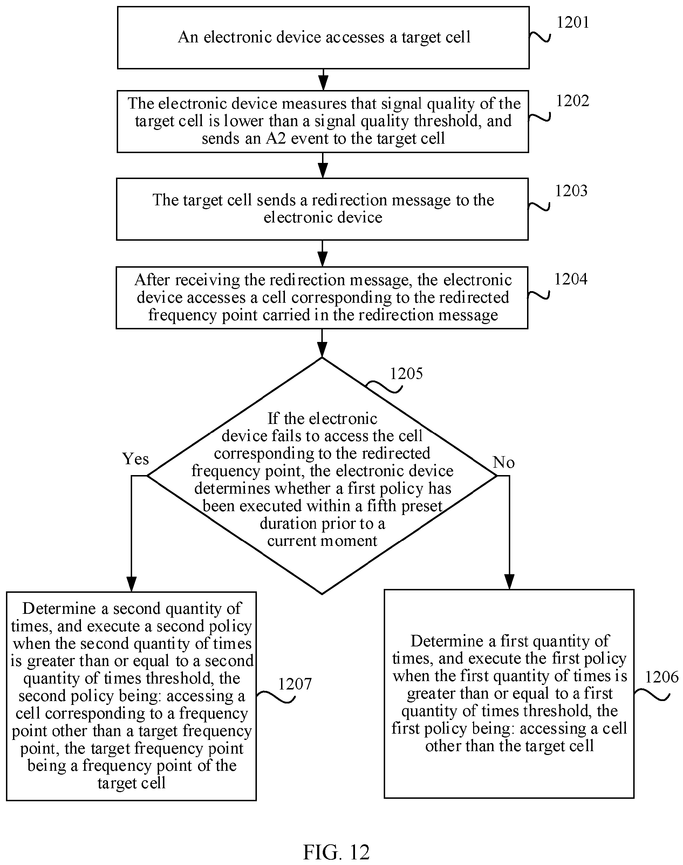

FIG. 12 is a flowchart of a cell access method according to an embodiment of this application. Referring to FIG. 12, the method includes the following steps:
Step 1201: An electronic device accesses a target cell.

The operation of step 1201 is similar to the operation of step 301 in the foregoing embodiment in FIG. 3, and details are not described herein again in this embodiment of this application.

Step 1202: The electronic device measures that signal quality of the target cell is lower than a signal quality threshold, and sends an A2 event to the target cell.

The operation of step 1202 is similar to the operation of step 302 in the foregoing embodiment in FIG. 3, and details are not described herein again in this embodiment of this application.

Step 1203: The target cell sends a redirection message to the electronic device.

The operation of step 1203 is similar to the operation of step 303 in the foregoing embodiment in FIG. 3, and details are not described herein again in this embodiment of this application.

Step 1204: After receiving the redirection message, the electronic device accesses a cell corresponding to the redirected frequency point carried in the redirection message.

The operation of step 1204 is similar to the operation of step 304 in the foregoing embodiment in FIG. 3, and details are not described herein again in this embodiment of this application.

Step 1205: If the electronic device fails to access the cell corresponding to the redirected frequency point, the electronic device determines whether a first policy has been executed within a fifth preset duration prior to a current moment. If not, step 1206 is performed. If yes, step 1207 is performed.

The fifth preset duration may be preset. For example, the fifth preset duration may be 1 day, 2 days, or the like, which is not limited in this embodiment of this application.

Step 1206: Determine a first quantity of times if the electronic device has not executed the first policy within the fifth preset duration prior to the current moment, and execute the first policy when the first quantity of times is greater than or equal to a first quantity of times threshold, the first policy being: accessing a cell other than the target cell.

The operation of step 1206 is similar to the operation of step 305 in the foregoing embodiment in FIG. 3, and details are not described herein again in this embodiment of this application.

Step 1207: Determine a second quantity of times if the electronic device has executed the first policy within the fifth preset duration prior to the current moment, and execute a second policy when the second quantity of times is greater than or equal to a second quantity of times threshold, the second policy being: accessing a cell corresponding to a frequency point other than a target frequency point, the target frequency point being a frequency point of the target cell.

The operation of step 1206 is similar to the operation of step 505 in the foregoing embodiment in FIG. 5, and details are not described herein again in this embodiment of this application.

In this embodiment of this application, when failing to access the cell corresponding to the redirected frequency point, the electronic device may first adopt the first policy in an attempt to resolve the problem. If the problem occurs again after the first policy is executed, the second policy may be adopted in an attempt to resolve the problem. Generally, the second policy has a higher probability of successfully resolving the problem than the first policy.

The technical effects achieved in the foregoing embodiment in FIG. 12 are similar to the technical effects achieved by the corresponding technical means in the embodiment in FIG. 3 and the embodiment in FIG. 5 above. Details are not described again in this embodiment of this application.

Next, a possible combination manner of the embodiment in FIG. 3 and the embodiment in FIG. 6 above is described in detail.

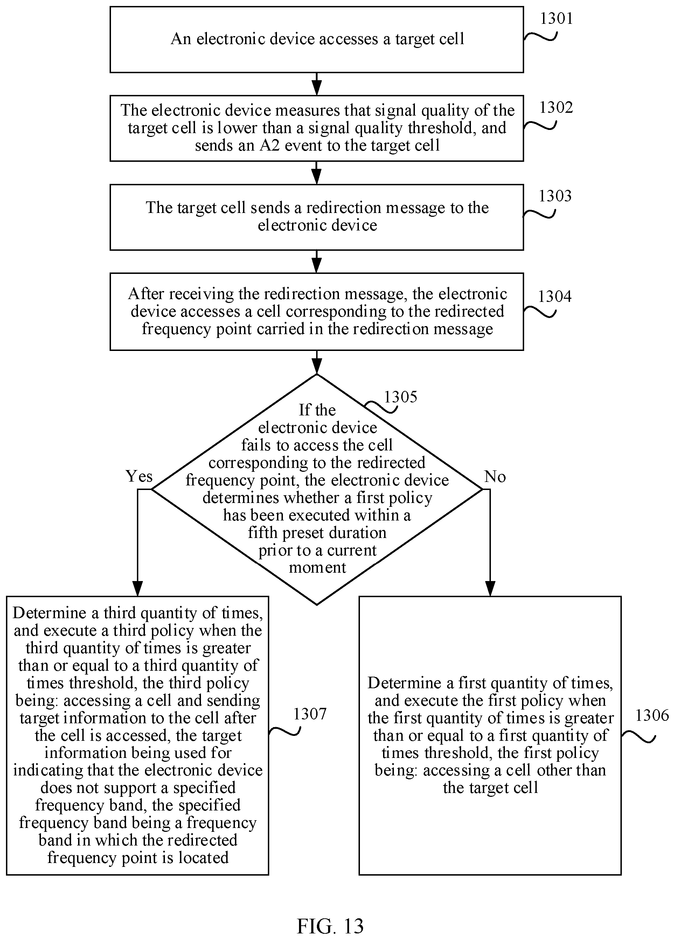

FIG. 13 is a flowchart of a cell access method according to an embodiment of this application. Referring to FIG. 13, the method includes the following steps:
Step 1301: An electronic device accesses a target cell.

The operation of step 1301 is similar to the operation of step 301 in the foregoing embodiment in FIG. 3, and details are not described herein again in this embodiment of this application.

Step 1302: The electronic device measures that signal quality of the target cell is lower than a signal quality threshold, and sends an A2 event to the target cell.

The operation of step 1302 is similar to the operation of step 302 in the foregoing embodiment in FIG. 3, and details are not described herein again in this embodiment of this application.

Step 1303: The target cell sends a redirection message to the electronic device.

The operation of step 1303 is similar to the operation of step 303 in the foregoing embodiment in FIG. 3, and details are not described herein again in this embodiment of this application.

Step 1304: After receiving the redirection message, the electronic device accesses a cell corresponding to the redirected frequency point carried in the redirection message.

The operation of step 1304 is similar to the operation of step 304 in the foregoing embodiment in FIG. 3, and details are not described herein again in this embodiment of this application.

Step 1305: If the electronic device fails to access the cell corresponding to the redirected frequency point, the electronic device determines whether the first policy has been executed within a fifth preset duration prior to a current moment. If not, step 1306 is performed. If yes, step 1307 is performed.

The fifth preset duration may be preset. For example, the fifth preset duration may be 1 day, 2 days, or the like, which is not limited in this embodiment of this application.

Step 1306: Determine a first quantity of times if the electronic device has not executed the first policy within the fifth preset duration prior to the current moment, and execute the first policy when the first quantity of times is greater than or equal to a first quantity of times threshold, the first policy being: accessing a cell other than the target cell.

The operation of step 1306 is similar to the operation of step 305 in the foregoing embodiment in FIG. 3, and details are not described herein again in this embodiment of this application.

Step 1307: Determine a third quantity of times if the electronic device has executed the first policy within the fifth preset duration prior to the current moment, and execute a third policy when the third quantity of times is greater than or equal to a third quantity of times threshold, the third policy being: accessing a cell and sending target information to the cell after the cell is accessed, the target information being used for indicating that the electronic device does not support a specified frequency band, the specified frequency band being a frequency band in which the redirected frequency point is located.

The operation of step 1306 is similar to the operation of step 605 in the foregoing embodiment in FIG. 6, and details are not described herein again in this embodiment of this application.

In this embodiment of this application, when failing to access the cell corresponding to the redirected frequency point, the electronic device may first adopt the first policy in an attempt to resolve the problem. If the problem occurs again after the first policy is executed, the third policy may be adopted in an attempt to resolve the problem. Generally, the third policy has a higher probability of successfully resolving the problem than the first policy.

The technical effects achieved in the foregoing embodiment in FIG. 13 are similar to the technical effects achieved by the corresponding technical means in the embodiment in FIG. 3 and the embodiment in FIG. 6 above. Details are not described again in this embodiment of this application.

Next, a possible combination manner of the embodiment in FIG. 5 and the embodiment in FIG. 6 above is described in detail.

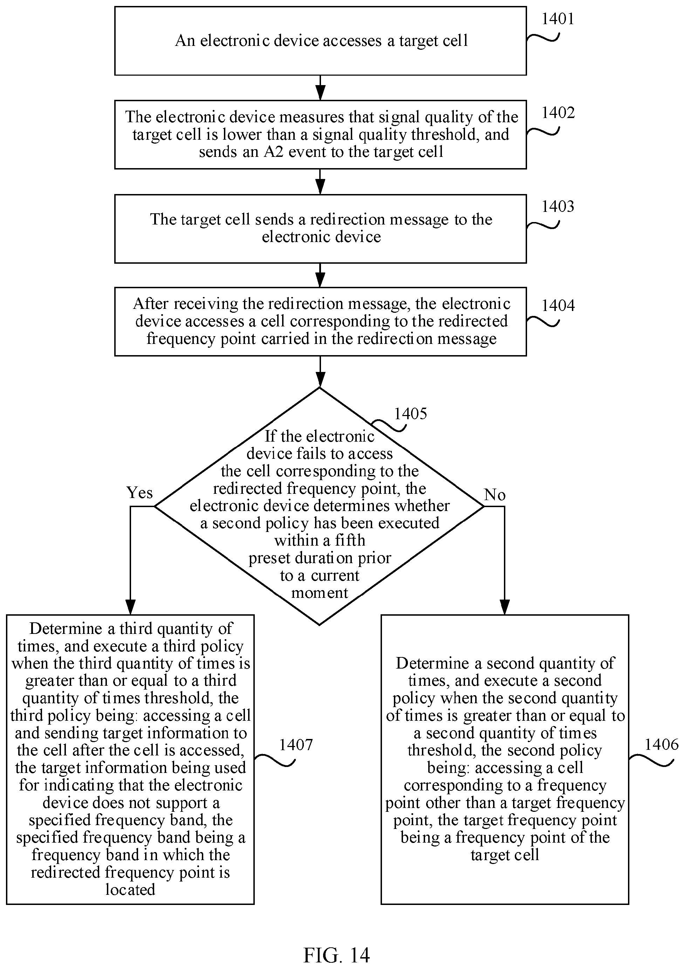

FIG. 14 is a flowchart of a cell access method according to an embodiment of this application. Referring to FIG. 14, the method includes the following steps:
Step 1401: An electronic device accesses a target cell.

The operation of step 1401 is similar to the operation of step 501 in the foregoing embodiment in FIG. 5, and details are not described herein again in this embodiment of this application.

Step 1402: The electronic device measures that signal quality of the target cell is lower than a signal quality threshold, and sends an A2 event to the target cell.

The operation of step 1402 is similar to the operation of step 502 in the foregoing embodiment in FIG. 5, and details are not described herein again in this embodiment of this application.

Step 1403: The target cell sends a redirection message to the electronic device.

The operation of step 1403 is similar to the operation of step 503 in the foregoing embodiment in FIG. 5, and details are not described herein again in this embodiment of this application.

Step 1404: After receiving the redirection message, the electronic device accesses a cell corresponding to the redirected frequency point carried in the redirection message.

The operation of step 1404 is similar to the operation of step 504 in the foregoing embodiment in FIG. 5, and details are not described herein again in this embodiment of this application.

Step 1405: If the electronic device fails to access the cell corresponding to the redirected frequency point, the electronic device determines whether a second policy has been executed within a fifth preset duration prior to a current moment. If not, step 1406 is performed. If yes, step 1407 is performed.

The fifth preset duration may be preset. For example, the fifth preset duration may be 1 day, 2 days, or the like, which is not limited in this embodiment of this application.

Step 1406: Determine a second quantity of times if the electronic device has not executed the second policy within the fifth preset duration prior to the current moment, and execute a second policy when the second quantity of times is greater than or equal to a second quantity of times threshold, the second policy being: accessing a cell corresponding to a frequency point other than the target frequency point, the target frequency point being a frequency point of the target cell.

The operation of step 1406 is similar to the operation of step 505 in the foregoing embodiment in FIG. 5, and details are not described herein again in this embodiment of this application.

Step 1407: Determine a third quantity of times if the electronic device has executed the second policy within the fifth preset duration prior to the current moment, and execute a third policy when the third quantity of times is greater than or equal to a third quantity of times threshold, the third policy being: accessing a cell and sending target information to the cell after the cell is accessed, the target information being used for indicating that the electronic device does not support a specified frequency band, the specified frequency band being a frequency band in which the redirected frequency point is located.

The operation of step 1406 is similar to the operation of step 605 in the foregoing embodiment in FIG. 6, and details are not described herein again in this embodiment of this application.

In this embodiment of this application, when failing to access the cell corresponding to the redirected frequency point, the electronic device may first adopt the second policy in an attempt to resolve the problem. If the problem occurs again after the second policy is executed, the third policy may be adopted in an attempt to resolve the problem. Generally, the third policy has a higher probability of successfully resolving the problem than the second policy.

The technical effects achieved in the foregoing embodiment in FIG. 14 are similar to the technical effects achieved by the corresponding technical means in the embodiment in FIG. 5 and the embodiment in FIG. 6 above. Details are not described again in this embodiment of this application.

Next, a possible combination manner of the embodiment in FIG. 3, the embodiment in FIG. 5, and the embodiment in FIG. 6 above is described in detail.

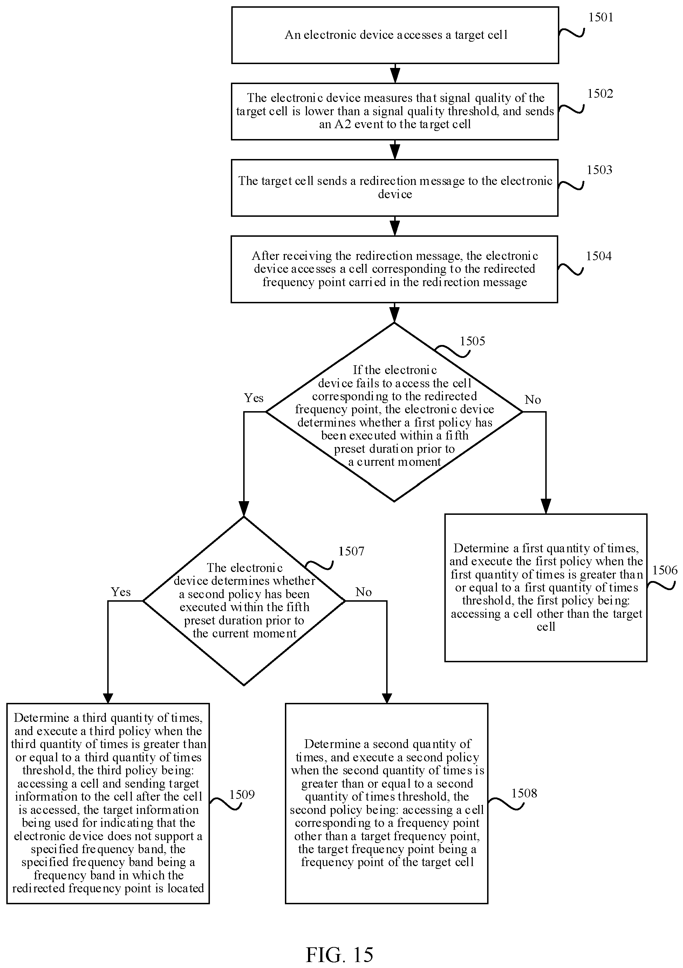

FIG. 15 is a flowchart of a cell access method according to an embodiment of this application. Referring to FIG. 15, the method includes the following steps:
Step 1501: An electronic device accesses a target cell.

The operation of step 1501 is similar to the operation of step 301 in the foregoing embodiment in FIG. 3, and details are not described herein again in this embodiment of this application.

Step 1502: The electronic device measures that signal quality of the target cell is lower than a signal quality threshold, and sends an A2 event to the target cell.

The operation of step 1502 is similar to the operation of step 302 in the foregoing embodiment in FIG. 3, and details are not described herein again in this embodiment of this application.

Step 1503: The target cell sends a redirection message to the electronic device.

The operation of step 1503 is similar to the operation of step 303 in the foregoing embodiment in FIG. 3, and details are not described herein again in this embodiment of this application.

Step 1504: After receiving the redirection message, the electronic device accesses a cell corresponding to the redirected frequency point carried in the redirection message.

The operation of step 1504 is similar to the operation of step 304 in the foregoing embodiment in FIG. 3, and details are not described herein again in this embodiment of this application.

Step 1505: If the electronic device fails to access the cell corresponding to the redirected frequency point, the electronic device determines whether the first policy has been executed within a fifth preset duration prior to a current moment. If not, step 1506 is performed. If yes, step 1507 is performed.

The fifth preset duration may be preset. For example, the fifth preset duration may be 1 day, 2 days, or the like, which is not limited in this embodiment of this application.

Step 1506: Determine a first quantity of times if the electronic device has not executed the first policy within the fifth preset duration prior to the current moment, and execute the first policy when the first quantity of times is greater than or equal to a first quantity of times threshold, the first policy being: accessing a cell other than the target cell.

The operation of step 1506 is similar to the operation of step 305 in the foregoing embodiment in FIG. 3, and details are not described herein again in this embodiment of this application.

Step 1507: If the electronic device has executed the first policy within the fifth preset duration prior to the current moment, the electronic device determines whether a second policy has been executed within the fifth preset duration prior to the current moment. If not, step 1508 is performed. If yes, step 1509 is performed.

Step 1508: Determine a second quantity of times if the electronic device has executed the second policy within the fifth preset duration prior to the current moment, and execute a second policy when the second quantity of times is greater than or equal to a second quantity of times threshold, the second policy being: accessing a cell corresponding to a frequency point other than the target frequency point, the target frequency point being a frequency point of the target cell.

The operation of step 1508 is similar to the operation of step 505 in the foregoing embodiment in FIG. 5, and details are not described herein again in this embodiment of this application.

Step 1509: Determine a third quantity of times if the electronic device has executed the second policy within the fifth preset duration prior to the current moment, and execute a third policy when the third quantity of times is greater than or equal to a third quantity of times threshold, the third policy being: accessing a cell and sending target information to the cell after the cell is accessed, the target information being used for indicating that the electronic device does not support a specified frequency band, the specified frequency band being a frequency band in which the redirected frequency point is located.

The operation of step 1509 is similar to the operation of step 605 in the foregoing embodiment in FIG. 6, and details are not described herein again in this embodiment of this application.

In this embodiment of this application, when failing to access the cell corresponding to the redirected frequency point, the electronic device may first adopt the first policy in an attempt to resolve the problem. If the problem occurs again after the first policy is executed, the second policy may be adopted in an attempt to resolve the problem. If the problem occurs again after the second policy is executed, the third policy may be adopted in an attempt to resolve the problem. Generally, the probabilities of successfully resolving the problem by the first policy, the second policy, and the third policy sequentially increase.

The technical effects achieved in the foregoing embodiment in FIG. 15 are similar to the technical effects achieved by the corresponding technical means in the embodiment in FIG. 3, the embodiment in FIG. 5, and the embodiment in FIG. 6 above. Details are not described again in this embodiment of this application.

Next, a possible combination manner of one or more of the embodiment in FIG. 3, the embodiment in FIG. 5, and the embodiment in FIG. 6 above with the foregoing embodiment in FIG. 7 is described in detail.

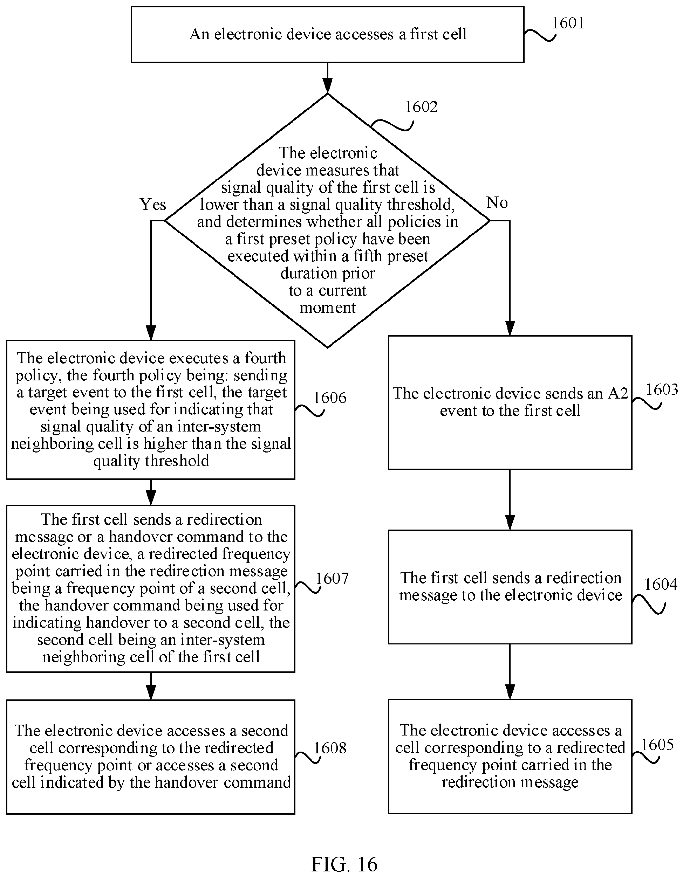

FIG. 16 is a flowchart of a cell access method according to an embodiment of this application. Referring to FIG. 16, the method includes the following steps:
Step 1601: An electronic device accesses a first cell.

The operation of step 1601 is similar to the operation of step 701 in the foregoing embodiment in FIG. 7, and details are not described herein again in this embodiment of this application.

Step 1602: The electronic device measures that signal quality of the first cell is lower than a signal quality threshold, and determines whether all policies in a first preset policy have been executed within a fifth preset duration prior to a current moment. If not, step 1603 to step 1605 are performed. If yes, step 1606 to step 1608 are performed.

The first preset policy may be preset. The first preset policy is a policy executed by the electronic device after access to a cell corresponding to a redirected frequency point carried in a redirection message fails. The first preset policy is a policy used for resolving the problem of service stuttering or even interruption. The first preset policy may include one or more of a first policy, a second policy, and a third policy.

It should be noted that, if the electronic device has not executed any policy in the first preset policy or has executed only some policies in the first preset policy within the fifth preset duration prior to the current moment, it may be determined that the electronic device has not executed all the policies in the first preset policy within the fifth preset duration prior to the current moment.

Step 1603: The electronic device sends an A2 event to the first cell if the electronic device has not executed all policies in the first preset policy within the fifth preset duration prior to the current moment.

The operation of step 1603 is similar to the operation of step 302 in the foregoing embodiment in FIG. 3, and details are not described herein again in this embodiment of this application.

Step 1604: The first cell sends a redirection message to the electronic device.

The operation of step 1604 is similar to the operation of step 303 in the foregoing embodiment in FIG. 3, and details are not described herein again in this embodiment of this application.

Step 1605: After receiving the redirection message, the electronic device accesses a cell corresponding to a redirected frequency point carried in the redirection message.

The operation of step 1605 is similar to the operation of step 304 in the foregoing embodiment in FIG. 3, and details are not described herein again in this embodiment of this application.

It should be noted that, in some embodiments, if the electronic device fails to access the cell corresponding to the redirected frequency point carried in the redirection message, related operations may be continued according to the embodiment in FIG. 3, the embodiment in FIG. 5, the embodiment in FIG. 6, the embodiment in FIG. 13, the embodiment in FIG. 14, or the embodiment in FIG. 15 above.

Step 1606: The electronic device executes a fourth policy if the electronic device has executed all policies in the first preset policy within the fifth preset duration prior to the current moment, the fourth policy being: sending a target event to the first cell, the target event being used for indicating that signal quality of an inter-system neighboring cell is higher than the signal quality threshold.

If the electronic device has executed all policies in the first preset policy within the fifth preset duration prior to the current moment, it indicates that there is a higher probability that the electronic device fails to access the cell corresponding to the redirected frequency point. Then, the electronic device may send the target event to the first cell when measuring that the signal quality of the first cell is lower than the signal quality threshold.

The operation of step 1606 is similar to the operation of step 702 in the foregoing embodiment in FIG. 7, and details are not described herein again in this embodiment of this application.

Step 1607: The first cell sends a redirection message or a handover command to the electronic device, a redirected frequency point carried in the redirection message being a frequency point of a second cell, the handover command being used for indicating handover to a second cell, and the second cell being an inter-system neighboring cell of the first cell.

The operation of step 1607 is similar to the operation of step 703 in the foregoing embodiment in FIG. 7, and details are not described herein again in this embodiment of this application.

Step 1608: The electronic device accesses, if receiving the redirection message, a second cell corresponding to a redirected frequency point carried in the redirection message; and the electronic device accesses, if receiving the handover command, a second cell indicated by the handover command.

The operation of step 1608 is similar to the operation of step 704 in the foregoing embodiment in FIG. 7, and details are not described herein again in this embodiment of this application.

The technical effects achieved in the foregoing embodiment in FIG. 16 are similar to the technical effects achieved by the corresponding technical means in the foregoing embodiments above. Details are not described again in this embodiment of this application.

Next, a possible combination manner of one or more of the embodiment in FIG. 3, the embodiment in FIG. 5, the embodiment in FIG. 6, and the embodiment in FIG. 7 above with the foregoing embodiment in FIG. 10 is described in detail.

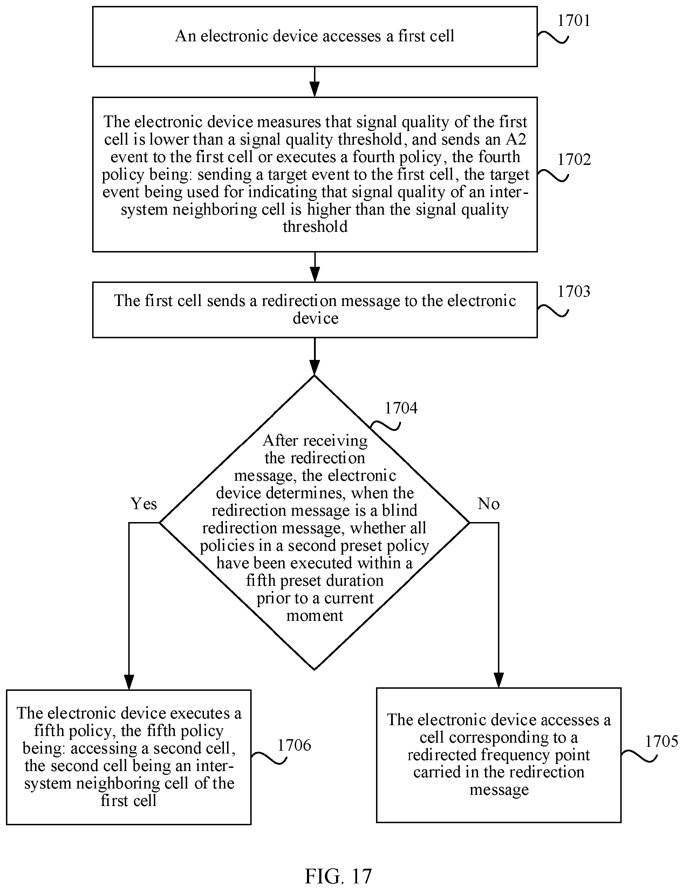

FIG. 17 is a flowchart of a cell access method according to an embodiment of this application. Referring to FIG. 17, the method includes the following steps:
Step 1701: An electronic device accesses a first cell.

The operation of step 1701 is similar to the operation of step 1001 in the foregoing embodiment in FIG. 10, and details are not described herein again in this embodiment of this application.

Step 1702: The electronic device measures that signal quality of the first cell is lower than a signal quality threshold, and sends an A2 event to the first cell or executes a fourth policy, the fourth policy being: sending a target event to the first cell, the target event being used for indicating that signal quality of an inter-system neighboring cell is higher than the signal quality threshold.

As an example, when measuring that the signal quality of the first cell is lower than the signal quality threshold, the electronic device may directly send the A2 event to the first cell or directly execute the fourth policy.

As another example, when measuring that the signal quality of the first cell is lower than the signal quality threshold, the electronic device may determine, in the manner of step 1602, step 1603, and step 1606 in the foregoing embodiment in FIG. 16, whether to send the A2 event to the first cell or execute the fourth policy.

Step 1703: The first cell sends a redirection message to the electronic device.

The operation of step 1703 is similar to the operation of step 1003 in the foregoing embodiment in FIG. 10, and details are not described herein again in this embodiment of this application.

Step 1704: After receiving the redirection message, the electronic device determines, when the redirection message is a blind redirection message, whether all policies in a second preset policy have been executed within a fifth preset duration prior to a current moment. If not, step 1705 is performed. If yes, step 1706 is performed.

The second preset policy may be preset. The second preset policy is a policy used for resolving the problem of service stuttering or even interruption. The second preset policy may include one or more of a first policy, a second policy, a third policy, and a fourth policy.

It should be noted that, if the electronic device has not executed any policy in the second preset policy or has executed only some policies in the second preset policy within the fifth preset duration prior to the current moment, it may be determined that the electronic device has not executed all the policies in the second preset policy within the fifth preset duration prior to the current moment.

It should be noted that, after receiving the redirection message, the electronic device may access a cell corresponding to a redirected frequency point carried in the redirection message when the redirection message is a measurement redirection message.

Step 1705: The electronic device accesses a cell corresponding to a redirected frequency point carried in the redirection message if the electronic device has not executed all policies in the second preset policy within the fifth preset duration prior to the current moment.

The operation of step 1705 is similar to the operation of step 1004 in the foregoing embodiment in FIG. 10, and details are not described herein again in this embodiment of this application.

It should be noted that, if the electronic device fails to access the cell corresponding to the redirected frequency point carried in the redirection message, related operations may be performed according to step 1005 in the embodiment in FIG. 10.

Step 1706: The electronic device executes a fifth policy if the electronic device has executed all policies in the second preset policy within the fifth preset duration prior to the current moment, the fifth policy being: accessing a second cell, the second cell being an inter-system neighboring cell of the first cell.

The operation of step 1706 is similar to the operation of step 1005 in the foregoing embodiment in FIG. 10, and details are not described herein again in this embodiment of this application.

The technical effects achieved in the foregoing embodiment in FIG. 17 are similar to the technical effects achieved by the corresponding technical means in the foregoing embodiments above. Details are not described again in this embodiment of this application.

Next, a possible combination manner of one or more of the embodiment in FIG. 3, the embodiment in FIG. 5, the embodiment in FIG. 6, the embodiment in FIG. 7, and the embodiment in FIG. 10 above with the foregoing embodiment in FIG. 11 is described in detail.

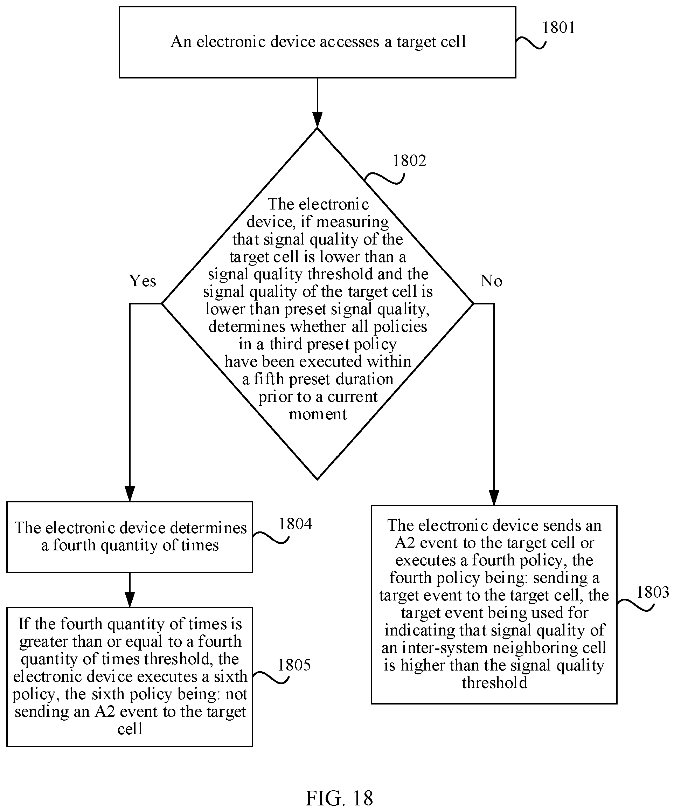

FIG. 18 is a flowchart of a cell access method according to an embodiment of this application. Referring to FIG. 18, the method includes the following steps:
Step 1801: An electronic device accesses a target cell.

The operation of step 1801 is similar to the operation of step 1101 in the foregoing embodiment in FIG. 11, and details are not described herein again in this embodiment of this application.

Step 1802: The electronic device, if measuring that signal quality of the target cell is lower than a signal quality threshold and the signal quality of the target cell is lower than preset signal quality, determines whether all policies in a third preset policy have been executed within a fifth preset duration prior to a current moment. If not, the following step 1803 is performed. If yes, the following step 1804 and step 1805 are performed.

The third preset policy may be preset. The third preset policy is a policy used for resolving the problem of service stuttering or even interruption. The third preset policy may include one or more of a first policy, a second policy, a third policy, a fourth policy, and a fifth policy.

It should be noted that, if the electronic device has not executed any policy in the third preset policy or has executed only some policies in the third preset policy within the fifth preset duration prior to the current moment, it may be determined that the electronic device has not executed all the policies in the third preset policy within the fifth preset duration prior to the current moment.

It should be noted that, after measuring that the signal quality of the target cell is lower than the signal quality threshold, the electronic device may send an A2 event to the target cell or execute a fourth policy if a signal quality threshold of the target cell is no lower than the preset signal quality. The fourth policy is: sending a target event to the target cell. The target event is used for indicating that signal quality of an inter-system neighboring cell is higher than the signal quality threshold.

As an example, after measuring that the signal quality of the target cell is lower than the signal quality threshold, the electronic device may directly send the A2 event to the target cell or directly execute the fourth policy if the signal quality threshold of the target cell is no lower than the preset signal quality.

As another example, after measuring that the signal quality of the target cell is lower than the signal quality threshold, the electronic device may determine, in the manner of step 1602, step 1603, and step 1606 in the foregoing embodiment in FIG. 16, whether to send the A2 event to the target cell or execute the fourth policy if the signal quality threshold of the target cell is no lower than the preset signal quality.

In some embodiments, after sending the A2 event to the target cell or executing the fourth policy, the electronic device may continue to perform related operations according to the foregoing embodiment in FIG. 17.

Step 1803: The electronic device sends an A2 event to the target cell or executes a fourth policy if the electronic device has not executed all policies in the third preset policy within the fifth preset duration prior to the current moment.

The operation that the electronic device sends the A2 event to the target cell or executes the fourth policy is similar to the above. Details are not described again in this embodiment of this application.

Step 1804: The electronic device determines a fourth quantity of times if the electronic device has executed all policies in the third preset policy within the fifth preset duration prior to the current moment.

The operation of step 1804 is similar to the operation of step 1102 in the foregoing embodiment in FIG. 11, and details are not described herein again in this embodiment of this application.

After the electronic device determines the fourth quantity of times, if the fourth quantity of times is less than a fourth quantity of times threshold, the electronic device may send the A2 event to the target cell or execute the fourth policy. The operation herein is similar to the above, and details are not described herein again in this embodiment of this application.

Step 1805: If the fourth quantity of times is greater than or equal to a fourth quantity of times threshold, the electronic device executes a sixth policy, the sixth policy being: not sending an A2 event to the target cell.

The operation of step 1805 is similar to the operation of step 1103 in the foregoing embodiment in FIG. 11, and details are not described herein again in this embodiment of this application.

The technical effects achieved in the foregoing embodiment in FIG. 18 are similar to the technical effects achieved by the corresponding technical means in the foregoing embodiments above. Details are not described again in this embodiment of this application.

The electronic device as referred to in this embodiment of this application is described below.

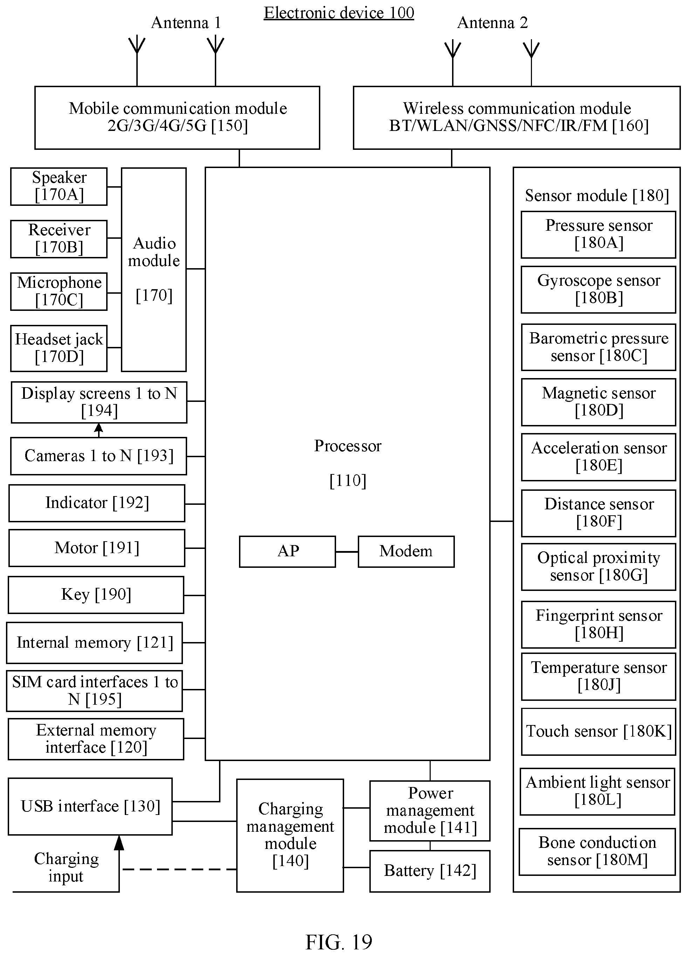

FIG. 19 is a schematic structural diagram of an electronic device according to an embodiment of this application. Referring to FIG. 19, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or a different component arrangement may be used. The components shown in the figure may be implemented by hardware, software, or a combination of software and hardware.

The processor 110 may include one or more processing units. For example, the processor 110 may include an application processor (application processor, AP), a modem processor (Modem, which may also be referred to as a baseband processor), a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components or may be integrated into one or more processors.

The controller may be a nerve center and a command center of the electronic device 100. The controller may generate an operation control signal based on instruction operation code and a time-sequence signal, to complete control of instruction fetch and instruction execution.

A memory may be further disposed in the processor 110, to store instructions and data. In some embodiments, the memory in the processor 110 is a cache. The memory may store an instruction or data that has been used or cyclically used by the processor 110. If needing to use the instructions or the data again, the processor 110 may directly invoke the instructions or the data from the memory, Repeated access is prevented, and a waiting time of the processor 110 is reduced, thereby improving system efficiency.

A wireless communication function of the electronic device 100 may be implemented by using the antenna 1, the antenna 2, the mobile communication module 150, the wireless communication module 160, the Modem, and the like.

The antenna 1 and the antenna 2 are configured to transmit and receive an electromagnetic wave signal. Each antenna of the electronic device 100 may be configured to cover one or more communication frequency bands. Different antennas may be further reused to improve utilization of the antennas. For example, the antenna 1 may be reused as a diversity antenna of a wireless local area network. In some other embodiments, the antenna may be used in combination with a tuning switch.

The mobile communication module 150 may provide a solution, applied to the electronic device 100, for wireless communication including 2G/3G/4G/5G, and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some function modules of the mobile communication module 150 may be disposed in the processor 110. In some embodiments, at least some functional modules of the mobile communication module 150 may be disposed in a same component as at least some modules of the processor 110.

The wireless communication module 160 may provide a solution, applied to the electronic device 100, for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices that integrate at least one communication processing module. The wireless communication module 160 receives an electromagnetic wave via the antenna 2, performs frequency modulation and filtering on the electromagnetic wave signal, and sends the processed signal to the processor 110. The wireless communication module 160 may further receive a to-be-sent signal from the processor 110, perform frequency modulation and amplification on the to-be-sent signal, and convert an amplified signal into an electromagnetic wave for radiation by using the antenna 2.

In some embodiments, in the electronic device 100, the antenna 1 is coupled to the mobile communication module 150, and the antenna 2 is coupled to the wireless communication module 160, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The SIM card interface 195 is configured to connect an SIM card. The SIM card may be inserted into the SIM card interface 195 or withdrawn from the SIM card interface 195, to implement contact with or separation from the electronic device 100. The electronic device 100 may support 1 or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. Types of the plurality of cards may be the same or different. The SIM card interface 195 is also compatible with different types of SIM cards. The SIM card interface 195 is also compatible with an external storage card. The electronic device 100 interacts with a network by using the SIM card, to implement functions such as making/answering a call and data communication. In some embodiments, the electronic device 100 uses an eSIM, namely, an embedded SIM card. The eSIM card may be embedded in the electronic device 100, and cannot be separated from the electronic device 100.

In this embodiment of this application, an operating system further runs on the foregoing components, for example, an iOS operating system developed by Apple Inc., an Android open source operating system developed by Google Inc., or a Windows operating system developed by Microsoft Corporation.

The operating system of the electronic device 100 may use a layered architecture, an event-driven architecture, a microkernel architecture, a microservice architecture, or a cloud architecture. In this embodiment of this application, an Android system with a layered architecture is used as an example to describe a software and hardware structure of the electronic device 100. It should be noted that, in this embodiment of this application, although the Android system is used as an example for description, the basic principle thereof is also applicable to the electronic device 100 based on an operating system such as iOS or Windows.

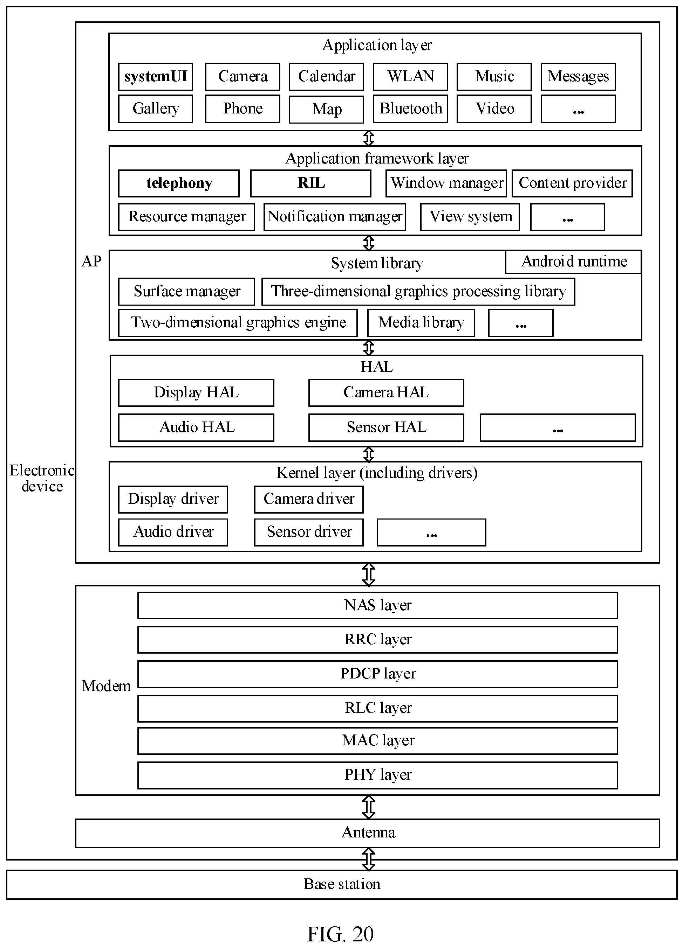

FIG. 20 is a block diagram of a software structure of an electronic device 100 according to an embodiment of this application. The software structure uses a layered architecture. In the layered architecture, software is divided into multiple layers, and each layer has a clear role and task. The layers communicate with each other by using a software interface. For example, an Android system runs on an AP. In some embodiments, the Android system is divided into five layers, which are respectively an application layer, an application framework layer (Framework), Android runtime (Android runtime) and system libraries, a hardware abstraction layer (hardware abstraction layer, HAL), and a kernel layer from top to bottom.

The application layer may include a series of application packages. The application packages may include Camera, Gallery, Calendar, Phone, Map, wireless local area network (wireless local area network, WLAN), Bluetooth, Music, Videos, and Messages. The application layer may further include a systemUI (system UI), and the systemUI is used for displaying an interface of the electronic device 100, such as displaying a signal icon corresponding to a SIM card, displaying a call interface, and the like.

The application program framework layer provides an application programming interface (application programming interface, API) and a programming framework for the application programs at the application program layer. The application framework layer includes some predefined functions. For example, the application framework layer may include a window manager, a content provider, a view system, a phone manager, a resource manager, a notification manager, and the like. The phone manager is configured to provide a call function of the electronic device 100, for example, management of a call status (including answering, hanging up, or the like). The phone manager is represented by telephony in FIG. 20. The application framework layer may further include a radio interface layer (radio interface layer, RIL). The Modem may exchange information with the telephony by using the RIL.

The Modem may include a NAS layer, an RRC layer, a packet data convergence protocol (packet data convergence protocol, PDCP) layer, a radio link control (radio link control, RLC) layer, a media access control (media access control, MAC) layer, and a physical (Physical, PHY) layer. The layers may be software modules. The Modem may interact with a base station by using an antenna. Optionally, the method provided in this embodiment of this application may be implemented by the Modem.

Some embodiments of this application provide an electronic device. The electronic device includes: one or more processors and a memory. The memory is configured to store computer program code. The computer program code includes computer instructions. When the one or more processors execute the computer instructions, the electronic device is caused to perform the foregoing cell access method.

Some embodiments of this application provide a chip system, applied to an electronic device. The chip system includes at least one processor and an interface. The interface is used for receiving instructions and transmitting the instructions to the at least one processor. The at least one processor runs the instructions to cause the electronic device to perform the foregoing cell access method. The chip system may be a Modem or a system on chip (system on chip, Soc) including a Modem, and the foregoing method may be implemented by a Modem.

All or some of the foregoing embodiments may be implemented by software, hardware, firmware, or any combination thereof. When the foregoing embodiments are implemented by software, all or some of the embodiments may be implemented in the form of a computer program product. The computer program product includes one or more computer instructions. When the computer instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server or data center to another website, computer, server or data center in a wired (for example, a coaxial cable, an optical fiber or a digital subscriber line (Digital Subscriber Line, DSL)) or wireless (for example, infrared, wireless or microwave) manner. The computer-readable storage medium may be any usable medium accessible to the computer, or a data storage device such as a server or a data center integrating one or more usable media. For example, the usable medium may be a magnetic medium (for example, a floppy disk, a hard disk, or a magnetic tape), an optical medium (for example, a digital versatile disc (Digital Versatile Disc, DVD)), a semiconductor medium (for example, a solid state disk (Solid State Disk, SSD)), or the like.

The foregoing descriptions are optional embodiments provided in this application, but are not intended to limit this application. Any modification, equivalent replacement, improvement, and the like made within the technical scope disclosed in this application shall fall within the protection scope of this application.

## Claims

1. A cell access method, applied to an electronic device, the method comprising:
receiving a redirection message sent by a target cell;
accessing a cell corresponding to a redirected frequency point carried in the redirection message;
determining a first quantity of times if access to the cell corresponding to the redirected frequency point carried in the redirection message fails, the first quantity of times being a quantity of times of failure of access to the cell corresponding to the redirected frequency point indicated by the target cell within a first preset duration prior to a current moment; and
executing a first policy if the first quantity of times is greater than or equal to a first quantity of times threshold, the first policy being: accessing a cell other than the target cell.

2. The method according to claim 1, before the determining a first quantity of times if access to the cell corresponding to the redirected frequency point carried in the redirection message fails, further comprising:
determining, if the cell corresponding to the redirected frequency point carried in the redirection message is not found, that access to the cell corresponding to the redirected frequency point carried in the redirection message fails.

3. The method according to claim 1 or 2, wherein the determining a first quantity of times if access to the cell corresponding to the redirected frequency point carried in the redirection message fails comprises:
determining, if access to the cell corresponding to the redirected frequency point carried in the redirection message fails, the first quantity of times when a cell identifier of the target cell is not a problem cell identifier; and
the method further comprises:
executing, if access to the cell corresponding to the redirected frequency point carried in the redirection message fails, the first policy when the cell identifier of the target cell is a problem cell identifier.

4. The method according to any one of claims 1 to 3, after the determining a first quantity of times, further comprising:
recording the cell identifier of the target cell as a problem cell identifier if the first quantity of times is greater than or equal to the first quantity of times threshold.

5. The method according to claim 1 or 2, wherein the determining a first quantity of times if access to the cell corresponding to the redirected frequency point carried in the redirection message fails comprises:
determining, if access to the cell corresponding to the redirected frequency point carried in the redirection message fails, the first quantity of times when the first policy has not been executed within a fifth preset duration prior to the current moment.

6. The method according to claim 5, wherein the method further comprises:
determining, if access to the cell corresponding to the redirected frequency point carried in the redirection message fails, a second quantity of times when the first policy has been executed within the fifth preset duration prior to the current moment, the second quantity of times being a quantity of times of failure of access to a cell corresponding to a redirected frequency point indicated by a cell corresponding to a target frequency point within a second preset duration prior to the current moment, the target frequency point being a frequency point of the target cell; and
executing a second policy if the second quantity of times is greater than or equal to a second quantity of times threshold, the second policy being: accessing a cell corresponding to a frequency point other than the target frequency point.

7. The method according to claim 5, wherein the method further comprises:
determining, if access to the cell corresponding to the redirected frequency point carried in the redirection message fails, a third quantity of times when the first policy has been executed within the fifth preset duration prior to the current moment, the third quantity of times being a quantity of times of failure of access to the cell corresponding to the redirected frequency point within a third preset duration prior to the current moment; and
executing a third policy if the third quantity of times is greater than or equal to a third quantity of times threshold, the third policy being: accessing a cell and sending target information to the cell after the cell is accessed, the target information being used for indicating that the electronic device does not support a specified frequency band, the specified frequency band being a frequency band in which the redirected frequency point is located.

8. A cell access method, applied to an electronic device, the method comprising:
receiving a redirection message sent by a target cell;
accessing a cell corresponding to a redirected frequency point carried in the redirection message;
determining a second quantity of times if access to the cell corresponding to the redirected frequency point carried in the redirection message fails, the second quantity of times being a quantity of times of failure of access to a cell corresponding to a redirected frequency point indicated by a cell corresponding to a target frequency point within a second preset duration prior to a current moment, the target frequency point being a frequency point of the target cell; and
executing a second policy if the second quantity of times is greater than or equal to a second quantity of times threshold, the second policy being: accessing a cell corresponding to a frequency point other than the target frequency point.

9. The method according to claim 8, before the determining a second quantity of times if access to the cell corresponding to the redirected frequency point carried in the redirection message fails, further comprising:
determining, if the cell corresponding to the redirected frequency point carried in the redirection message is not found, that access to the cell corresponding to the redirected frequency point carried in the redirection message fails.

10. The method according to claim 8 or 9, wherein the determining a second quantity of times if access to the cell corresponding to the redirected frequency point carried in the redirection message fails comprises:
determining, if access to the cell corresponding to the redirected frequency point carried in the redirection message fails, the second quantity of times when the target frequency point is not a problem frequency point; and
the method further comprises:
executing, if access to the cell corresponding to the redirected frequency point carried in the redirection message fails, the second policy when the target frequency point is a problem frequency point.

11. The method according to any one of claims 8 to 10, after the determining a second quantity of times, further comprising:
recording the target frequency point as a problem frequency point if the second quantity of times is greater than or equal to the second quantity of times threshold.

12. The method according to claim 8 or 9, wherein the determining a second quantity of times if access to the cell corresponding to the redirected frequency point carried in the redirection message fails comprises:
determining, if access to the cell corresponding to the redirected frequency point carried in the redirection message fails, the second quantity of times when the second policy has not been executed within a fifth preset duration prior to the current moment; and
the method further comprises:
determining, if access to the cell corresponding to the redirected frequency point carried in the redirection message fails, a third quantity of times when the second policy has been executed within the fifth preset duration prior to the current moment, the third quantity of times being a quantity of times of failure of access to the cell corresponding to the redirected frequency point within a third preset duration prior to the current moment; and
executing a third policy if the third quantity of times is greater than or equal to a third quantity of times threshold, the third policy being: accessing a cell and sending target information to the cell after the cell is accessed, the target information being used for indicating that the electronic device does not support a specified frequency band, the specified frequency band being a frequency band in which the redirected frequency point is located.

13. A cell access method, applied to an electronic device, the method comprising:
receiving a redirection message sent by a target cell;
accessing a cell corresponding to a redirected frequency point carried in the redirection message, a frequency band in which the redirected frequency point is located being a specified frequency band;
determining a third quantity of times if access to the cell corresponding to the redirected frequency point fails, the third quantity of times being a quantity of times of failure of access to the cell corresponding to the redirected frequency point within a third preset duration prior to a current moment; and
executing a third policy if the third quantity of times is greater than or equal to a third quantity of times threshold, the third policy being: accessing a cell and sending target information to the cell after the cell is accessed, the target information being used for indicating that the electronic device does not support the specified frequency band.

14. The method according to claim 13, before the determining a third quantity of times if access to the cell corresponding to the redirected frequency point fails, further comprising:
determining, if the cell corresponding to the redirected frequency point is not found, that access to the cell corresponding to the redirected frequency point fails.

15. The method according to claim 13 or 14, wherein the target information is a user equipment UE capability information; and the sending target information to the cell comprises:
sending a mobility registration updating message to the cell, the mobility registration updating message being used for indicating that the UE capability information needs to be updated;
receiving a UE capability enquiry message sent by the cell; and
sending the UE capability information to the cell, the UE capability information being used for indicating that the electronic device does not support the specified frequency band.

16. The method according to any one of claims 13 to 15, wherein the determining a third quantity of times if access to the cell corresponding to the redirected frequency point fails comprises:
determining, if access to the cell corresponding to the redirected frequency point fails, the third quantity of times when a cell identifier of the target cell is not a problem cell identifier and a frequency point of the target cell is not a problem frequency point; and
the method further comprises:
executing, if access to the cell corresponding to the redirected frequency point fails, the third policy when the cell identifier of the target cell is a problem cell identifier and/or the frequency point of the target cell is a problem frequency point.

17. A cell access method, applied to an electronic device, the method comprising:
executing, when a first cell is accessed, a fourth policy if it is measured that signal quality of the first cell is lower than a signal quality threshold, the fourth policy being: sending a target event to the first cell, the target event being used for indicating that signal quality of an inter-system neighboring cell is higher than the signal quality threshold; and
accessing, if a redirection message sent by the first cell is received, a second cell corresponding to a redirected frequency point carried in the redirection message, the redirected frequency point carried in the redirection message being a frequency point of the second cell, and the second cell being an inter-system neighboring cell of the first cell; and accessing, if a handover command originating from the first cell is received, a second cell indicated by the handover command.

18. The method according to claim 17, wherein the target event is a B event, the B event being a B1 event or a B2 event.

19. The method according to claim 17 or 18, wherein the executing a fourth policy if it is measured that signal quality of the first cell is lower than a signal quality threshold comprises:
executing, if it is measured that the signal quality of the first cell is lower than the signal quality threshold, the fourth policy when a cell identifier of the first cell is a problem cell identifier and/or a frequency point of the first cell is a problem frequency point.

20. The method according to claim 17 or 18, wherein the executing a fourth policy if it is measured that signal quality of the first cell is lower than a signal quality threshold comprises:
executing, if it is measured that the signal quality of the first cell is lower than the signal quality threshold, the fourth policy when all policies in a first preset policy have been executed within a fifth preset duration prior to a current moment, the first preset policy comprising one or more of a first policy, a second policy, and a third policy.

21. A cell access method, applied to an electronic device, the method comprising:
receiving a redirection message sent by a first cell;
accessing a cell corresponding to a redirected frequency point carried in the redirection message; and
executing, if access to the cell corresponding to the redirected frequency point fails, a fifth policy when the redirection message is a blind redirection message, the fifth policy being: accessing a second cell, the second cell being an inter-system neighboring cell of the first cell.

22. The method according to claim 21, wherein the accessing a cell corresponding to a redirected frequency point carried in the redirection message comprises:
accessing the cell corresponding to the redirected frequency point if a cell identifier of the first cell is not a problem cell identifier and a frequency point of the first cell is not a problem frequency point; and
accessing, if the cell identifier of the first cell is a problem cell identifier and/or the frequency point of the first cell is a problem frequency point, the cell corresponding to the redirected frequency point when the redirection message is a measurement redirection message; and
after the receiving a redirection message sent by a first cell, the method further comprises:
executing, if the cell identifier of the first cell is a problem cell identifier and/or the frequency point of the first cell is a problem frequency point, the fifth policy when the redirection message is a blind redirection message.

23. The method according to claim 21, wherein the accessing a cell corresponding to a redirected frequency point carried in the redirection message comprises:
accessing the cell corresponding to the redirected frequency point if not all policies in a second preset policy have been executed within a fifth preset duration prior to a current moment, the second preset policy comprising one or more of a first policy, a second policy, a third policy, and a fourth policy; and
after the receiving a redirection message sent by a first cell, the method further comprises:
executing, if all policies in the second preset policy have been executed within the fifth preset duration prior to the current moment, the fifth policy when the redirection message is a blind redirection message.

24. A cell access method, applied to an electronic device, the method comprising:
determining, when a target cell is accessed if it is measured that signal quality of the target cell is lower than a signal quality threshold, a fourth quantity of times when the signal quality of the target cell is lower than preset signal quality, the fourth quantity of times being a quantity of times of failure of access to a cell corresponding to a redirected frequency point carried in a redirection message within a fourth preset duration prior to a current moment, and the preset signal quality being signal quality capable of triggering blind redirection; and
executing a sixth policy if the fourth quantity of times is greater than or equal to a fourth quantity of times threshold, the sixth policy being: not sending an A2 event to the target cell.

25. The method according to claim 24, wherein the determining, if it is measured that signal quality of the target cell is lower than a signal quality threshold, a fourth quantity of times when the signal quality of the target cell is lower than preset signal quality comprises:
determining, if it is measured that the signal quality of the target cell is lower than the signal quality threshold, the fourth quantity of times when the signal quality of the target cell is lower than the preset signal quality, a cell identifier of the target cell is not a problem cell identifier, and a frequency point of the target cell is not a problem frequency point; and
the method further comprises:
executing, if it is measured that the signal quality of the target cell is lower than the signal quality threshold, the sixth policy when the signal quality of the target cell is lower than the preset signal quality and the cell identifier of the target cell is a problem cell identifier and/or the frequency point of the target cell is a problem frequency point.

26. The method according to claim 24, wherein the determining, if it is measured that signal quality of the target cell is lower than a signal quality threshold, a fourth quantity of times when the signal quality of the target cell is lower than preset signal quality comprises:
determining, if it is measured that the signal quality of the target cell is lower than the signal quality threshold, the fourth quantity of times when the signal quality of the target cell is lower than the preset signal quality and all policies in a third preset policy have been executed within a fifth preset duration prior to a current moment, the third preset policy comprising one or more of a first policy, a second policy, a third policy, a fourth policy, and a fifth policy.

27. An electronic device, wherein the electronic device comprises a memory, a processor, and a computer program stored in the memory and executable on the processor, and when the computer program is executed by the processor, the method according to any one of claims 1 to 26 is implemented.

28. A chip system, wherein the chip system is applied to an electronic device, and the chip system comprises one or more processors, the processor being configured to invoke a computer instruction to cause the electronic device to perform the method according to any one of claims 1 to 26.

29. A computer-readable storage medium, wherein the computer-readable storage medium has instructions stored therein, and when the instructions are run on a computer, the computer is caused to perform the method according to any one of claims 1 to 26.
